# EUROPEAN PATENT SPECIFICATION

(11) **EP 2 727 828 B1**
(45) Date of publication and mention of the grant of the patent: **03.10.2018**
(21) Application number: 13190093.8
(22) Date of filing: 24.10.2013
(51) Int. Cl.: B64C 3/56, B64C 23/06

(54) **Wing fold system with latch pins through multiple mating lugs**
Flügelendenanklappsystem mit in Laschen geführten Verrieglungsstiften
Système de pliage de bouts d'aile d'avion avec des goupilles de verrouillage retenues dans des pattes de fixation

(30) Priority: 30.10.2012 US 201261720345 P; 30.10.2012 US 201213664416; 09.10.2013 US 201314049425
(43) Date of publication of application: 07.05.2014
(60) Divisional application: 18187701.0
(73) Proprietor: The Boeing Company, Chicago, IL 60606-1596 (US)
(72) Inventor: Good, Mark Steven, Chicago, IL Illinois 60606-2016 (US); Kordel, Jan A, Chicago, IL Illinois 60606-2016 (US); Pietersen, Quentin Theodor, Chicago, IL Illinois 60606-2016 (US); Walker, Steven Paul, Chicago, IL Illinois 60606-2016 (US); Jones, Kelly Thomas, Chicago, IL Illinois 60606-2016 (US); Lassen, Matthew August, Chicago, IL Illinois 60606-2016 (US); Hansken, Rickie, Chicago, IL Illinois 60606-2016 (US)
(74) Representative: Boult Wade Tennant LLP

(56) References cited:
- GB-A- 773 739
- US-A- 2 166 564
- US-A- 5 381 986
- US-A- 5 452 643

## Description

### FIELD OF THE DISCLOSURE

This disclosure relates to systems and methods for providing wings, and more specifically, to systems and methods for latching wings that enhance aircraft performance.

### BACKGROUND OF THE DISCLOSURE

In today's commercial transport industry, it is highly desirable to design aircraft configurations that yield reduced fuel burn per seat-mile, as fuel burn per seat-mile is a metric of fuel efficiency. Efficient aircraft configurations are ever more important as fuel costs increase. Aircraft aerodynamic drag and fuel burn are generally reduced as the aspect ratio of the aircraft wing increases. Similarly, operating larger aircraft, carrying more passengers and payload, are generally more efficient between two destinations than flying several trips with smaller aircraft. Thus larger aircraft and aircraft with longer wingspans tend to be more efficient. However, taxiway spacing and gate locations for most airports were established without providing adequate spacing for aircraft with the longer wingspans that can be produced with today's technology.

Therefore, a need exists in the art for an aircraft that can benefit from a long wingspan in flight, while being able to reduce the wingspan while operating at an airport.

US 5381986 discloses a folding wing-tip system wherein a plurality of latch pins are locked into a latch position by primary locks and secondary locks.

### SUMMARY

Illustrative embodiments provide for a method of a wing fold system of a wing of an aircraft is presented. The method may include preventing, via a first cam that may include a first lock of a latch, which may prevent movement of a latch pin of the latch, which may prevent movement of an unfixed portion of the wing with respect to a fixed portion of the wing, a second lock from transitioning to a second engaged position until the first lock is in a first engaged position via contact with a second cam of the second lock. Preventing, via the second cam comprised by the second lock of a latch, the first lock from transitioning away from the first engaged position until the second lock transitions away from the second engaged position.

Illustrative embodiments provide for a wing fold system of a wing of an aircraft. The system may include a first lock of a latch to prevent movement of a latch pin of the latch to prevent movement of an unfixed portion of the wing with respect to a fixed portion of the wing, the first lock comprising a first cam to prevent the second lock from transitioning to a second engaged position until the first lock is in a first engaged position via contact with a second cam of the second lock. A second lock of the latch, the second lock comprising the second cam to prevent the first lock from transitioning away from the first engaged position until the second lock transitions away from the second engaged position.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a diagram of an aircraft embodying a wing fold controller of a wing fold system in a flight position in accordance with an illustrative embodiment;
**Figure 2** is a diagram of an aircraft embodying a wing fold controller of a wing fold system in a folded position in accordance with an illustrative embodiment;
**Figure 3** is a block diagram of a wing of an aircraft with a wing fold system in accordance with an illustrative embodiment;
**Figure 4** is a block diagram of a wing fold system with a group of latches in accordance with an illustrative embodiment;
**Figure 5** is a block diagram of a first lock of a latch of a wing fold system in accordance with an illustrative embodiment;
**Figure 6** is a block diagram of a second lock of a latch of a wing fold system in accordance with an illustrative embodiment;
**Figures 7A** and **7B****,** are a diagram of a wing fold system in a wing accordance with an illustrative embodiment, **Figure 7A** is a diagram of a location of a wing fold system in a wing, **Figure 7B** is a perspective top view diagram of selected elements of a wing fold system with the wing in a flight position in accordance with an illustrative embodiment;
**Figure 8** is a perspective view diagram of wing fold system with a wing in a folded position in accordance with an illustrative embodiment;
**Figure 9** is a perspective view diagram of wing fold system with a wing in a flight position in accordance with an illustrative embodiment;
**Figures 10A** and **10B** are a top view cutaway diagram of a latch pin from a latch of a wing fold system in accordance with an illustrative embodiment, **Figure 10A** illustrates the latch pin with the latch in an open position, and **Figure 10B** illustrates the latch pin with the latch in a closed position;
**Figures 11A** and **11B****,** are a side view diagram of a wing with a first latch pin and a second latch pin in accordance with an illustrative embodiment. **Figure 11A** is a side view diagram with a first central axis of the first latch pin and a second central axis of the second latch pin each being aligned substantially parallel to a centerline of rotation of an unfixed portion of the wing. **Figure 11B** is a side view diagram with each central axis canted away from the centerline of rotation of the unfixed portion of the wing.
**Figure 12** is a perspective view diagram of selected components of a latch of a wing fold system of a wing in accordance with an illustrative embodiment;

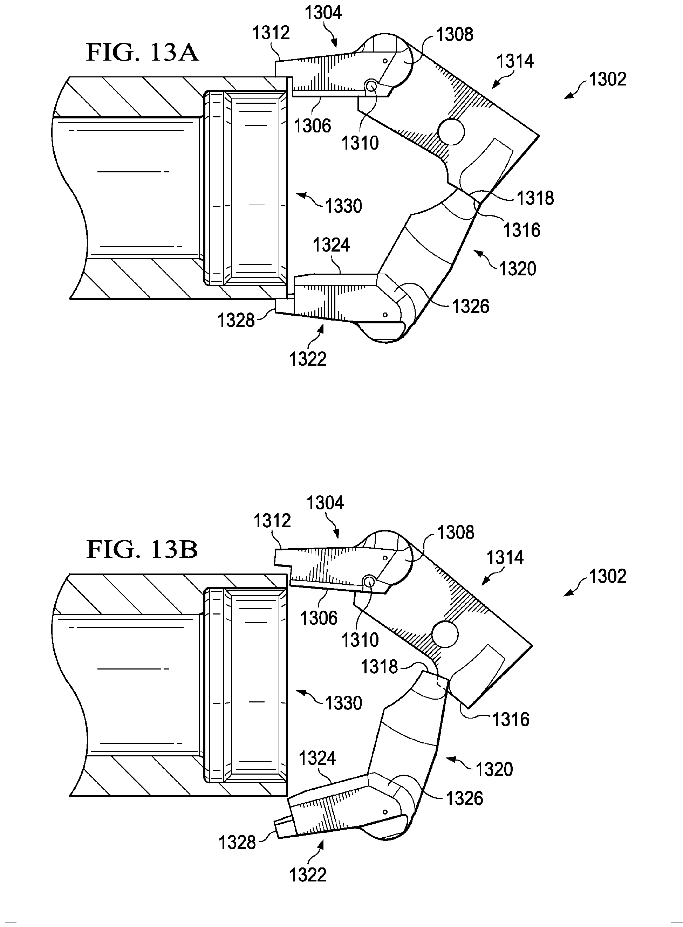

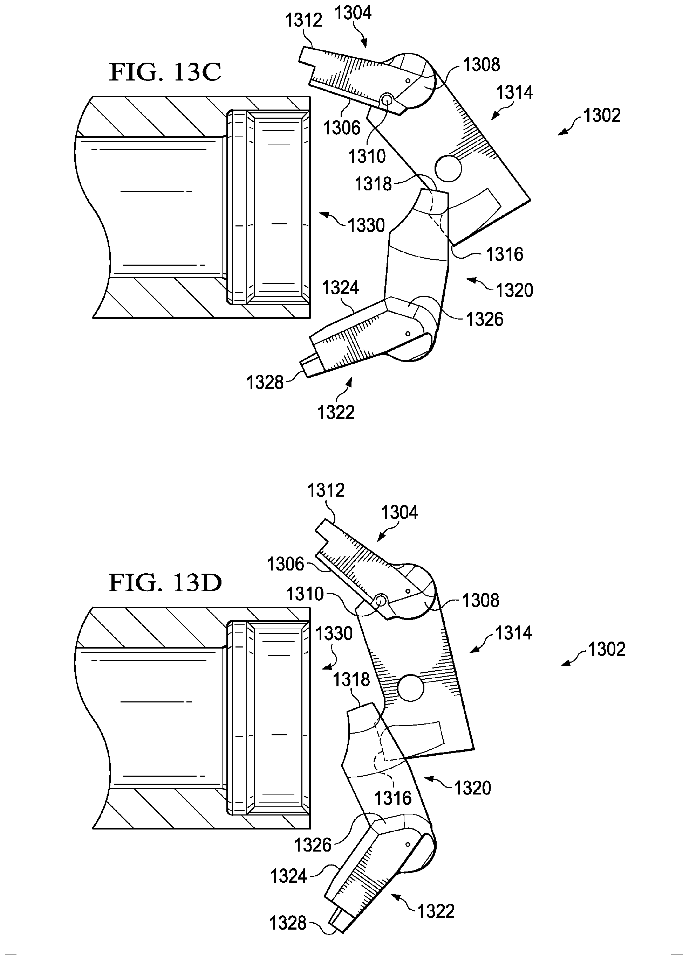

**Figures 13A** - **13D****,** are a top plan view diagram of a first cam, a first lock member, a second cam, a second cam member, and a latch pin, of a latch depicted in accordance with an illustrative embodiment, **Figure 13A** depicts the latch in closed position, with the first lock member and the second lock member engaged with latch pin, **Figure 13B** depicts the second locked member disengaging from the latch pin as first lock member remains engage with the latch pin, **Figure 13C** depicts the second locked member further disengaging from the latch pin as first lock member disengages from the latch pin; and **Figure 13D** depicts both the first lock member and the second lock member fully disengaged from the latch pin before the latch pin moves from closed position;
**Figure 14****,** is a perspective view diagram of a locked sensor for a latch on a wing fold system in accordance with an illustrative embodiment;
**Figures 15A** - **15C** is a diagram of operations for a method of a wing fold system in accordance with an illustrative embodiment; **Figure 15A** shows operations **1502** to **1524** of the method; **Figure 15B** shows operations **1526** to **1548** of the method; and **Figure 15C** shows operations **1550** to **1572** of the method.
**Figure 16** is an illustration of an aircraft manufacturing and service method is depicted in accordance with an illustrative embodiment; and
**Figure 17** is an illustration of an aircraft is depicted in which an illustrative embodiment may be implemented.

### DETAILED DESCRIPTION

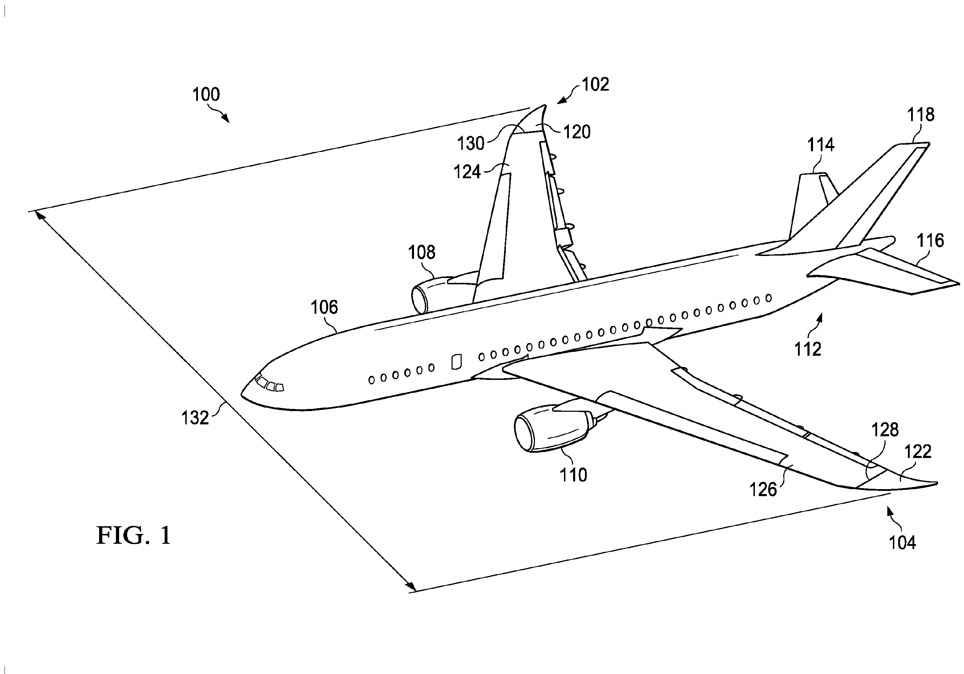

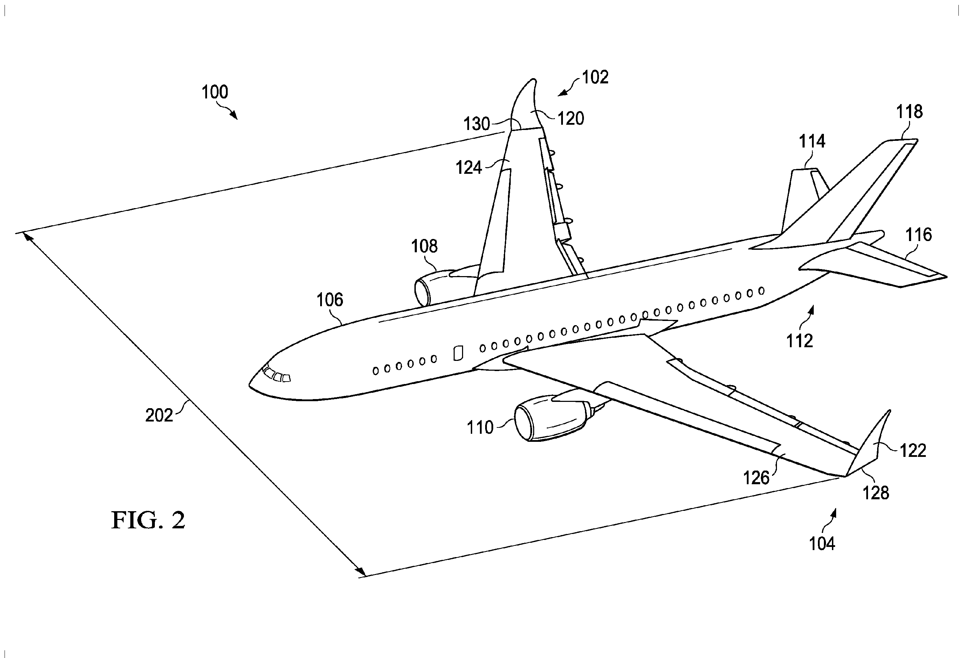

Unless otherwise noted and where appropriate, similarly named features and elements of an embodiment of one figure of the disclosure correspond to and embody similarly named features and elements of embodiments of the other figures of the disclosure. With reference now to the figures, and in particular, with reference to **Figures 1** and **2****,** an illustration of a diagram of an aircraft embodying a wing fold controller of a wing fold system is depicted in accordance with an illustrative embodiment. In this illustrative example, aircraft **100** includes wing **102** and wing **104** attached to body **106;** engine **108** attached to wing **102;** engine **110** attached to wing **104.** **Figure 1** depicts wing **102** and wing **104** of aircraft **100** in a flight position with wingspan **132.****Figure 2** depicts wing **102** and wing **104** of aircraft **100** in a folded position with wingspan 202. Wingspan 202 may be shorter than wingspan 132.

Wing **102** includes fixed portion **124** and unfixed portion **120.** Fixed portion **124** may be an inboard portion of wing **102,** which is fixed to body **106.** Similarly, wing **104** includes fixed portion **126** and unfixed portion **122.** Wing **102** includes wing fold system **130** to move unfixed portion **120** with respect to fixed portion **124.** Wing **104** includes wing fold system **128** to move unfixed portion **122** with respect to fixed portion **126.**

Body **106** has tail section **112.** Horizontal stabilizer **114,** horizontal stabilizer **116,** and vertical stabilizer **118** are attached to tail section **112** of body **106.**

Aircraft **100** is an example of an aircraft in which a wing fold system may be implemented in accordance with an illustrative embodiment. Wing fold system **128** and wing fold system **130** each may include a latch assembly in accordance with an illustrative embodiment.

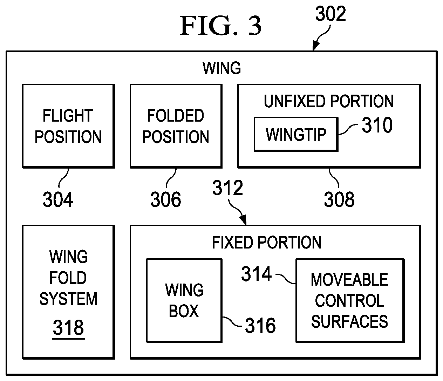

With reference to **Figure 3, Figure 3** is a block diagram of a wing of an aircraft with a wing fold system in accordance with an illustrative embodiment. More specifically, wing **302** may be an illustrative embodiment of wing **102** and/or wing **104** in **Figures 1** and **2****.** Wing **302** may include flight position **304,** folded position **306,** fixed portion **312,** unfixed portion **308,** and wing fold system **318.** The folding of wing **302** may allow for an aircraft to be flown with a wingspan that is longer than that allowed by an airport, such as but not limited to International Civil Aviation Organization "Code E" airports, from which the aircraft may be used, and wing **302** may provide lift for the aircraft.

Flight position **304** may be a state of wing **302.** When wing **302** of an aircraft is in flight position **304,** the aircraft may be ready for flight. For example, wing **102** and wing **104** of **Figure 1** are in a flight position.

Folded position **306** may be a state of wing **302.** When wing **302** of an aircraft is in folded position **306,** the aircraft is not ready for flight, but the overall wingspan of aircraft **100** may be shorter. A shorter wingspan may allow use of aircraft **500** in locations at airports that require a shorter overall wingspan.

Fixed portion **312** may be an embodiment of fixed portion **124** of wing **102** and an embodiment of fixed portion **126** of wing **104** of **Figures 1** and **2****.** Fixed portion **312** of wing **302** may include wing box **316** and moveable control surfaces **314.** Wing box **316** may be a structural component connected to wing **302.** Moveable control surfaces **314** may include flaps that allow for controlling flight of aircraft **100.**

Unfixed portion **308** may be an embodiment of unfixed portion **120** of wing **102** and an embodiment of unfixed portion **122** of wing **104** of **Figures 1** and **2****.** Unfixed portion **308** rotates with respect to fixed portion 312 of wing **302** between flight position **304** of wing **302** and folded position **306** of wing **302.** Unfixed portion **308** of wing **302** may include wingtip **310.** Wingtip **310** may not include moveable control surfaces **314.**

Wing fold system **318** may be an embodiment of wing fold system **128** and wing fold system **130** of **Figures 1** and **2****.** Wing fold system **318** may move wingtip **310** between flight position **304** and folded position **306.** Wing fold system **318** may include several features and components as described below.

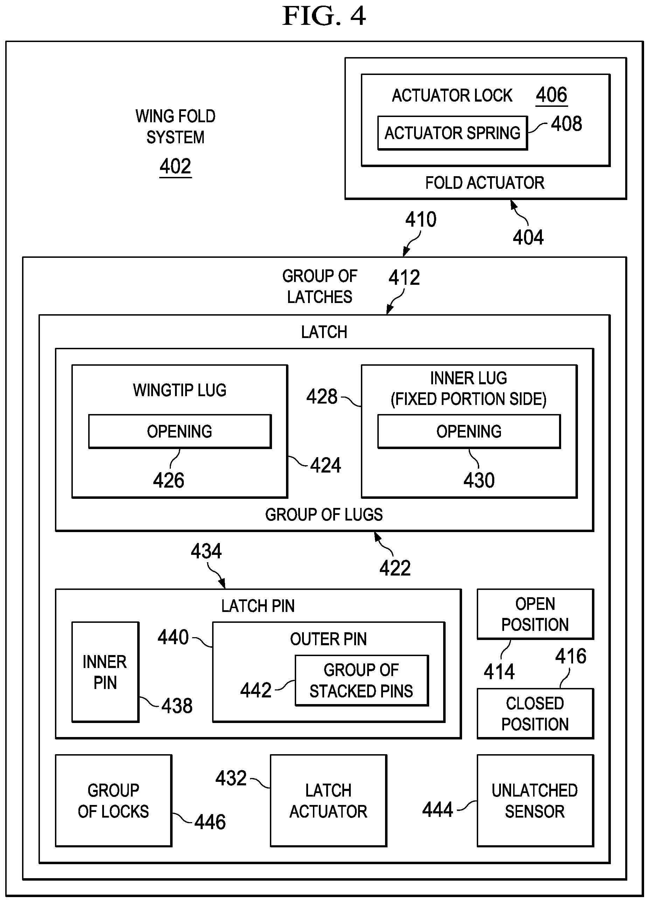

With reference to **Figure 4, Figure 4** is a block diagram of a wing fold system with a group of latches in accordance with an illustrative embodiment. More specifically, wing fold system **402** may include wing **302,** fold actuator **404,** and group of latches **410.** Wing fold system **402** may be an embodiment of wing fold system **318** of aircraft **100** of **Figures 1****,** **2****,** and **3****.** Description of **Figure 4** may relate to, and use reference numbers from, **Figure 1****,** **Figure 2****,** and **Figure 3****.** Wing fold system **402** may transition wing **302** of an aircraft between flight position **304** and folded position **306** so that the aircraft may have a longer overall wingspan **132** during flight and a shorter overall wingspan **202** when not in flight.

Fold actuator **404** maybe a single chamber actuator or a dual chamber actuator and may include actuator lock **406.** A single chamber actuator may reduce a weight of fold actuator **404.** Reducing the weight of fold actuator **404** may increase a fuel efficiency for aircraft **100** of **Figure 1****.** Fold actuator **404** may be connected between unfixed portion **308** of wing **302** and fixed portion **312** of wing **302** and may provide a force that may move unfixed portion **308** wing **302** with respect to fixed portion **312** of wing **302.** Fold actuator **404** may use hydraulic, pneumatic, or electrical, or other appropriate power, or any combination thereof, and may use linear or rotational motion, or any combination thereof. As depicted in **Figure 4****,** fold actuator **404** may be a linear hydraulic actuator.

Actuator lock **406** may include actuator spring **408.** Actuator spring **408** may bias actuator lock **406** and may engage fold actuator **404** in an extended position. Actuator spring **408** may keep actuator lock **406** engaged. Actuator lock **406** may engage when fold actuator **404** may be in an extended position and, correspondingly, wing **302** may be in folded position **306.** Actuator lock **406** may disengage when a pressure in a chamber of fold actuator **404** may provide sufficient force that may overcome a spring force from actuator spring **408** and release actuator lock **406.**

Group of latches **410** may include latch **412.** Group of latches **410** may secure wingtip **310** of wing **302** in flight position **304.** Wing **302** may have a first latch in a forward portion of wing **302** and a second latch in an aft portion of wing **302** as a part of wing fold system **402.**

Latch **412** may include group of lugs **422,** latch actuator **432,** latch pin **434,** unlatched sensor **444,** and group of locks **446.** Latch **412** may secure fixed portion **312** of wing **302** to unfixed portion **308** of wing **302.** Latch **412** may be in one of several positions including open position **414** and closed position **416.**

Each latch **412** in group of latches **410** may optionally be canted with respect to an axis that may be parallel to a roll axis, or a longitudinal axis of an aircraft connected to wing **302.** The roll axis may be a longitudinal axis that may extend from a tail to a nose of the aircraft, passing through a center of gravity of the aircraft. The roll axis may be substantially perpendicular to a vertical axis, and substantially perpendicular to a pitch axis for the aircraft. Each latch **412** in group of latches **410** may optionally be canted with respect an axis of rotation of unfixed portion **308** relative to fixed portion **312** of wing **302** on the aircraft. Canting each latch **412** may reduce the size of a fairing that might be required on wing **302** and may cover latch **412.**

In open position **414,** latch pin **434** may be fully retracted so that each wingtip lug **424** of group of lugs **422** may be free to move with respect to each inner lug **428** of group of lugs **422.** Unfixed portion **308** of wing **302** may connect to wingtip lug **424** and may transition between folded position **306** and flight position **304.** In open position **414,** each lock of group of locks **446** may be in a disengaged position.

In closed position **416,** latch pin **434** may be fully extended through group of lugs **422** and may prevent group of lugs **422** from moving with respect to each other, which thereby may prevent unfixed portion **308** of wing **302** from moving with respect to fixed portion **312** of wing **302.** In closed position **416,** each lock of group of locks **446** may be in an engaged position.

When transitioning between open position **414** and closed position **416,** latch pin **434** may be partially extended through a portion of group of lugs **422.** When transitioning between open position **414** and closed position **416,** each lock of group of locks **446** may transition between an engaged position and a disengaged position.

Group of lugs **422** may include one or more wingtip lug **424** and one or more inner lug **428.** Each lug of group of lugs **422** may include an opening through which latch pin **434** may move. Group of lugs **422** may secure unfixed portion **308** of wing **302** to fixed portion **312** of wing **302.** Group of lugs of **422** may be interlaced when wing **302** may be in flight position **304.**

Wingtip lug **424** may include opening **426** that may coincide with opening **430** of inner lug **428** and may facilitate entry of latch pin **434** within wingtip lug **424** and inner lug **428.** Wingtip lug **424** may be attached to and may extend from wingtip **310** of unfixed portion **308** of wing **302.**

Inner lug **428** may be attached to and may extend from fixed portion **312** of wing **302.** Inner lug **428** may include opening **430** that may coincide with opening **426** of wingtip lug **424** and may facilitate entry of latch pin **234** within wingtip lug **424** and inner lug **428.**

Latch actuator **432** may transition latch **412** between open position **414** and closed position **416** by moving latch pin **434.** Latch actuator **432** may be a linear hydraulic actuator. Latch actuator **432** may use hydraulic, pneumatic, or electrical, or other appropriate power, or any combination thereof, and may use linear or rotational motion, or any combination thereof.

Latch pin **434** may be constructed as a pin with a pin, which may include inner pin **438** and outer pin **440.**

Latch pin **434** may interlock group of lugs **422** and may prevent unfixed portion **308** of wing **302** from moving with respect to fixed portion **312** of wing **302.** Latch pin **434** may slide substantially parallel to a roll axis, an outermost rib of fixed portion **312** of wing **302,** an axis of rotation of unfixed portion **308** relative to fixed portion **312** of wing **302** on the aircraft or a longitudinal axis, of an aircraft connected to wing **302.** Each latch pin 434 may also be aligned canted relative to an axis as described immediately above.

Outer pin **440** may surround inner pin **438.** Outer pin **440** may provide a load path between wingtip lug **424** and inner lug **428.** Outer pin **440** may optionally include group of stacked pins **442.** Outer pin **440** may be configured such that a first part of inner pin **438** may not provide the load path while a second part of outer pin **440,** which may encircle first part of inner pin **438** may be providing the load path.

Inner pin **438** may provide a secondary pin to provide a secondary load path if outer pin **440** may be unable to provide the load path. Inner pin **438** may be not loaded until outer pin **440** may be unable to provide the load path. Inner pin **438** may be configured such that a gap may exist between outer pin **440** and inner pin **438.** Inner pin **438** may be configured such that inner pin **438** does not directly contact outer pin **440.**

Group of stacked pins **442** may separate load paths for groups of lugs **422.** A first load path may include one or more first inner lugs, one or more first wingtip lug **424** and a first stacked pin of group of stacked pins **442.** The first load path may be separate from a second load path that may include one or more second inner lug **428,** one or more second wingtip lug **424** from group of lugs **422,** and a second stacked pin of group of stacked pins **442.** An inability of the first stacked pin to provide the first load path may be independent from an inability of the second stacked pin to provide the second load path.

Unlatched sensor **444** may sense when latch **412** may be in open position. Unlatched sensor **444** may be connected to latch actuator **432** and may sense based on contact with latch pin **434.**

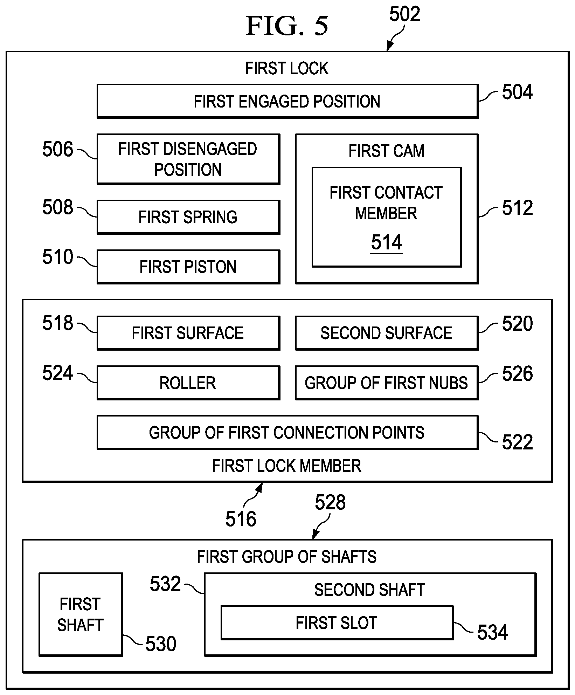

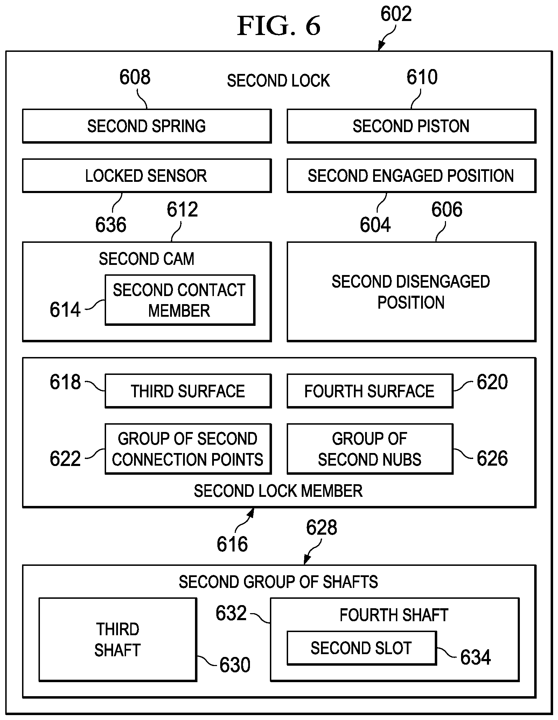

Group of locks **446** may prevent movement of latch pin **434** when latch **412** may be in closed position **416.** First lock **502 of** **Figure 5** of group of locks **446** may connect to second lock **602** of **Figure 6** of group of locks **446** so that operation of first lock **502** may be interdependent on operation of second lock **602.**

With reference to **Figure 5, Figure 5** is a block diagram of a first lock of a latch of a wing fold system in accordance with an illustrative embodiment. More specifically an illustration of a block diagram of first lock **502** of latch **412** of wing fold system **402** is depicted in accordance with an illustrative embodiment.

Description of **Figure 5** may relate to, and use reference numbers from, **Figure 1****,** **Figure 2****,** **Figure 3****,** and **Figure 4****.** First lock **502** may be an embodiment of first lock **502** of group of locks **446** of latch **412** of group of latches **410** of wing fold system **402** and wing fold system **318** of aircraft **100** of **Figure 1****,** **Figure 2****,** **Figure 3****,** and **Figure 4****.**

First lock **502** may include: first spring **508,** first piston **510,** first cam **512,** first lock member **516,** and first group of shafts **528.** First lock **502** may engage latch pin **434** after latch pin **434** may be inserted into group of lugs **422.** First lock **502** may transition between first engaged position **504** and first disengaged position **506.**

First engaged position **504** may prevent latch pin **434** from transitioning away from closed position **416.** When in first engaged position **504,** a portion of first lock member **516** may contact a portion of latch pin **434** and may prevent latch pin **434** from moving.

First disengaged position **506** may allow latch **412** to transition between open position **414** and closed position **416.** When in a fully disengaged position, first lock member **516** may not contact a portion of latch pin **434** and may not prevent latch pin **434** from moving. First lock member **516** may, when in a partially disengaged position, contact a portion of latch pin **434** but may not prevent latch pin **434** from moving.

First spring **508** may engage first lock member **516** and may bias first lock **502** to first engaged position **504.** First spring **508** may be connected to second shaft **532** of first group of shafts **528.**

First piston **510** may disengage first lock **502** and may transition first lock **502** to first disengaged position **506** by moving first lock member **516.** First piston **510** may provide a sufficient force to overcome a first spring force of first spring **508.** First piston **510** may be connected to first cam **512** and may transfer movement and force from first piston **510** to first lock member **516.**

First cam **512** may include first contact member **514.** First cam **512** may be shaped to inhibit second lock **602** from transitioning to second engaged position **604** until first lock **502** may be in first engaged position **504.** First cam **512** may be shaped to inhibit first lock **502** from transitioning from first disengaged position **506** until second lock **602** has transitioned away from a second disengaged position.

First contact member **514** may be shaped so that when first lock **502** may be in first engaged position **504** and second lock **602** may be in second engaged position **604,** contact between first contact member **514** of first cam **512** and second contact member **614** of second cam **612** may prevent first cam **512** and first lock **502** from transitioning away from first engaged position **504** before second lock **602** may transition away from second engaged position **604.** First contact member **514** may be shaped so that when first lock **502** may be in first disengaged position **506,** contact between first contact member **514** of first cam **512** and second contact member **614** of second cam **612** may prevent second cam **612** and second lock **602** from transitioning away from a second disengaged position before first lock **502** may transition away from first disengaged position **506.** First contact member **514** may prevent second lock member **616** of second lock **602** from contacting latch pin **434** while latch pin **434** may be transitioning from open position **414** to closed position **416.**

First lock member **516** may include: first surface **518,** second surface **520,** group of first connection points **522,** roller **524,** and group of first nubs **526.** First lock member **516** may contact latch pin **434** and may prevent latch pin **434** from moving after latch pin **434** may be in closed position **416** to bring first lock **502** to first engaged position **504.**

First surface **518** may minimize, via its shape, contact with latch pin **434.** First surface **518** may minimize, via its shape, any combination of movement and rotation of first lock member **516** during transition to first disengaged position **506.** First surface **518** may be shaped cylindrically with a curvature substantially similar a curvature of latch pin **434.** First surface **518** may be angularly offset with respect to second surface **520.**

Second surface **520** may minimize, via its shape, contact with latch pin **434** when first lock **502** may be in first disengaged position **506** and when latch **412** may transition from open position **414** to closed position **416.** Second surface **520** may be shaped cylindrically with a curvature substantially similar to a curvature of latch pin **434.** Second surface **520** may be angularly offset with respect to first surface **518.**

Group of first connection points **522** may be connections between first lock member **516** and one or more shafts of first group of shafts **528.** Each first connection point of group of first connection points **522** may be scalloped at first connections located between first lock member **516** and each shaft of first group of shafts **528.** The scalloping at group of first connection points **522** may remove a torsional connection between first piston **510** and first lock member **516** when first lock member **516** and first shaft **530** of group of shafts **528** may be sheared by latch pin **434.**

Roller **524** may reduce friction between first surface **518** of first lock member **516** and latch pin **434** as latch pin may **434** move into groups of lugs **422** that may be interlaced, and latch **412** may transition from open position **414** to closed position **416** and while first spring **508** may bias first lock **502** towards first engaged position **504.** Roller **524** may be on a single lock member of a single lock of group of locks **446** due to an interdependent nature of group of locks **446** where first cam **512** with second cam **612** of second lock **602** may prevent second lock **602** member from contacting latch pin **434** while latch **412** may be in transition between open position **414** and closed position **416.**

Group of first nubs **526** may extend from first lock member. Group of first nubs **526** may prevent first lock member **516** from moving too far in first engaged position **504.** Group of first nubs **526** may create a group of first witness marks on latch pin **434** to aid inspection of latch pin **434.** A quantity of nubs in group of first nubs **526** on first lock member **516** of first lock **502** may differ from a quantity of second nubs on a second lock and may identify that group of first nubs **526** may create a group of first witness marks. Group of first nubs **526** may be one nub.

First group of shafts **528** may include first shaft **530** and second shaft **532.** First group of shafts **528** may connect various elements of first lock **502** and may transfer force and torque between the various elements of first lock **502.**

Second shaft **532** may connect first spring **508** with first lock member **516.** Second shaft **532** may transfer torque from first spring **508** to first lock member **516** and may transition first lock **502** to first engaged position **504** after latch **412** may be fully extended into closed position **416** between group of lugs **422,** which may include an interlaced wingtip lug **424** and inner lug **428.**

Second shaft **532** may include first slot **534** that when viewed, may indicate position of first lock member **516** as being in one of, or in between, first engaged position **504** and first disengaged position **506.**

First shaft **530** may connect first lock member **516,** first cam **512,** and first piston **510.** First shaft **530** may transfer resistance from first cam **512** to first lock member **516** and may prevent movement of first lock member **516** based on position of first cam **512** with respect to second cam **612** of second lock **602.**

With reference to **Figure 6, Figure 6** is a block diagram of a second lock of a latch of a wing fold system in accordance with an illustrative embodiment. More specifically, an illustration of a block diagram of second lock **602** of latch **412** of wing fold system **402** is depicted in accordance with an illustrative embodiment. Description of **Figure 6** may relate to, and use reference numbers from, **Figure 1****,** **Figure 2****,** **Figure 3****,** **Figure 4****,** and **Figure 5****.**

Second lock **602** may include: second spring **608,** second piston **610,** second cam **612,** second lock member **616,** and second group of shafts **628,** and locked sensor **636.** Second lock **602** may be an embodiment of second lock **602** of group of locks **446** of latch **412** of group of latches **410** of wing fold system **402** and wing fold system **318** of aircraft **100** of **Figures 1****,** **2****,** **3****,** and **4****.** Second lock **602** may engage latch pin **434** after latch pin **434** is inserted into group of lugs **422.** Second lock **602** may transition between second engaged position **604** and second disengaged position **606.**

Second engaged position **604** may prevent latch pin **434** from transitioning away from closed position **416.** When in second engaged position **604,** a portion of first lock member **516** may contact a portion of latch pin **434** and may prevent latch pin **434** from moving. When in second engaged position **604,** second cam **612** may prevent first cam **512** from moving, which may prevent first lock member **516** from moving.

Second disengaged position **606** may allow latch **412** to transition between open position **414** and closed position **416.** When in a fully disengaged position, second lock member **616** may not contact a portion of latch pin **434** and may not prevent latch pin **434** from moving. When in a partially disengaged position, second lock member **616** may contact a portion of latch pin **434** but may not prevent latch pin **434** from moving.

Second spring **608** may engage second lock **602** and may bias second lock **602** to second engaged position **604.** Second spring **608** may connect to fourth shaft **632** of second group of shafts **628.**

Second piston **610** may disengage second lock **602** and may transition second lock **602** to disengaged position **606** by moving second lock member **616.** Second piston **610** may provide a sufficient force to overcome a second spring force of second spring **608.** Second piston **610** may connect to second cam **612** and may transfer movement and force from second piston **610** to second lock member **616.**

Second cam **612** may include second contact member **614.** Second cam **612** may be shaped to inhibit second lock **602** from transitioning to second engaged position **604** until first lock **502** may be in first engaged position **504.** Second cam **612** may be shaped to inhibit first lock **502** from transitioning from first disengaged position **506** until second lock **602** may have transitioned away from second disengaged position **606.**

Second contact member **614** may be shaped so that when first lock **502** may be in first engaged position **504** and second lock **602** may be in second engaged position **604,** contact between first contact member **514** of first cam **512** and second contact member **614** of second cam **612** may prevent first cam **512** and first lock **502** from transitioning away from first engaged position **504** before second lock **602** may transition away from second engaged position **604.** Second contact member **614** may be shaped so that when first lock **502** may be in first disengaged position **506,** contact between first contact member **514** of first cam **512** and second contact member **614** of second cam **612** may prevent second cam **612** and second lock **602** from transitioning away from second disengaged position **606** before first lock **502** may transition away from first disengaged position **506.** Second contact member **614** may prevent second lock member **616** of second lock **602** from contacting latch pin **434** while latch pin **434** may be transitioning from open position **414** to closed position **416.**

Second lock member **616** may include: third surface **618,** fourth surface **620,** group of second connection points **622,** and group of second nubs **626.** Second lock member **616** may contact latch pin **434** and may prevent latch pin **434** from moving after latch pin **434** may be in closed position **416** and first lock **502** may be in first engaged position **504** to bring second lock **602** to second engaged position **604.**

Third surface **618** may minimize, via its shape, contact with latch pin **434.** Third surface **618** may minimize, via shape, any combination of movement and rotation of second lock member **616** during transition to second disengaged position **606.** Third surface **618** may be shaped cylindrically with curvature substantially similar to latch pin **434** curvature of latch pin **434.** Third surface **618** may be angularly offset with respect to fourth surface **620.**

Fourth surface **620** may minimize, via its shape, contact with latch pin **434** when second lock **602** may be in second disengaged position **606** and when latch **412** may transition from open position **414** to closed position **416.** Fourth surface **620** may be shaped cylindrically with curvature substantially similar to latch pin **434** curvature of latch pin **434.** Fourth surface **620** may be angularly offset with respect to third surface **618.**

Group of second connection points **622** are connections between second lock member **616** and one or more shafts of second group of shafts **628.** Each second connection point of group of second connection points **622** may be scalloped at second connections located between second lock member **616** and each shaft of second group of shafts **628.** The scalloping at second connection points **622** may remove torsional connection between second lock member **616** and locked sensor **636** when second lock member **616** and third shaft **630** of group of shafts **628** may be sheared by latch pin **434.**

Group of second nubs **626** may prevent second lock member **616** from moving too far in second engaged position **604.** Group of second nubs **626** may create a group of second witness marks on latch pin **434** to aid inspection of latch pin **434.** A quantity of second nubs of second lock **602** may differ from a quantity of first nubs of first lock **502** and may identify that group of second nubs may create group of second witness marks.

Second group of shafts **628** may include third shaft **630** and fourth shaft **632.** Second group of shafts **628** may connect various elements of second lock **602** and may transfer force and torque between the various elements of second lock **602.**

Fourth shaft **632** may connect second spring **608** with second lock member **616.** Fourth shaft **632** may transfer torque from second spring **608** to second lock member **616** and may transition second lock **602** to second engaged position **604** after latch **412** may be fully extended into closed position **416** between group of lugs **422,** which may include a wingtip lug **424** interlaced with an inner lug **428.** Fourth shaft **632** may include second slot **634** that when viewed, may indicate position of second lock **602** as being in one of or in between second engaged position **604** and second disengaged position **606.**

Third shaft **630** may connect second lock member **616,** second cam **612,** and second piston **610.** Third shaft **630** may transfer resistance from second cam **612** to second lock member **616** and may prevent movement of second lock member **616** based on position of second cam **612** with respect to first cam **512** of first lock **502.**

Locked sensor **636** may sense when second lock **602** may be in second engaged position **604.** Second lock **602** being in second engaged position **604** may require first lock **502** to be in first engaged position **504** and latch pin **434** to be in between group of lugs **422** such that latch **412** may be in closed position **416.** Locked sensor **636** may include a redundant set of sensors. Locked sensor **636** may be any one of: an ultrasonic sensor, and electrical sensor, a mechanical contact sensor, other sensor systems as may be appropriate, or any combination thereof.

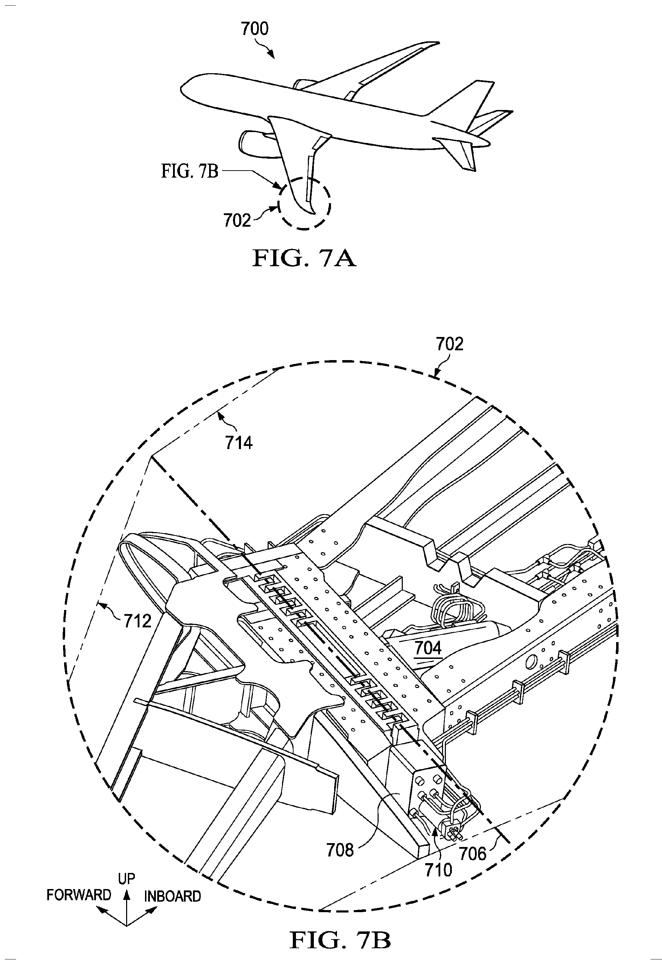

With reference to **Figure 7, Figure 7****,** is a diagram of a wing fold system in a wing accordance with an illustrative embodiment, **Figure 7A** is a diagram of a location of a wing fold system in a wing, **Figure 7B** is a perspective top view diagram of selected elements of a wing fold system with the wing in a flight position in accordance with an illustrative embodiment. More specifically, **Figure 7A** depicts a location for wing fold system **702** on aircraft **700,** in accordance with an illustrative embodiment. The illustration presents an area of a left wingtip of aircraft **700,** such as shown for unfixed portion **122** of aircraft **100** in **Figure 1****.** An inverse arrangement may be applicable for a right wingtip of an aircraft such as shown for unfixed portion **120** of aircraft **100** in **Figure 1****.**

With reference to **Figure 7B****,** wing fold system **702** may include: fold actuator **704,** centerline of rotation **706,** second latch **708,** second latch actuator **710,** unfixed portion **712,** fixed portion **714.** Second latch **708** may be an example of an embodiment of latch **412** as shown in **Figure 4****.** A first latch may be located at a forward edge of the wing fold system, but is not visible in this view. Unfixed portion **712** may be rotatably connected to fixed portion **714** about centerline of rotation **706** of unfixed portion **712.**

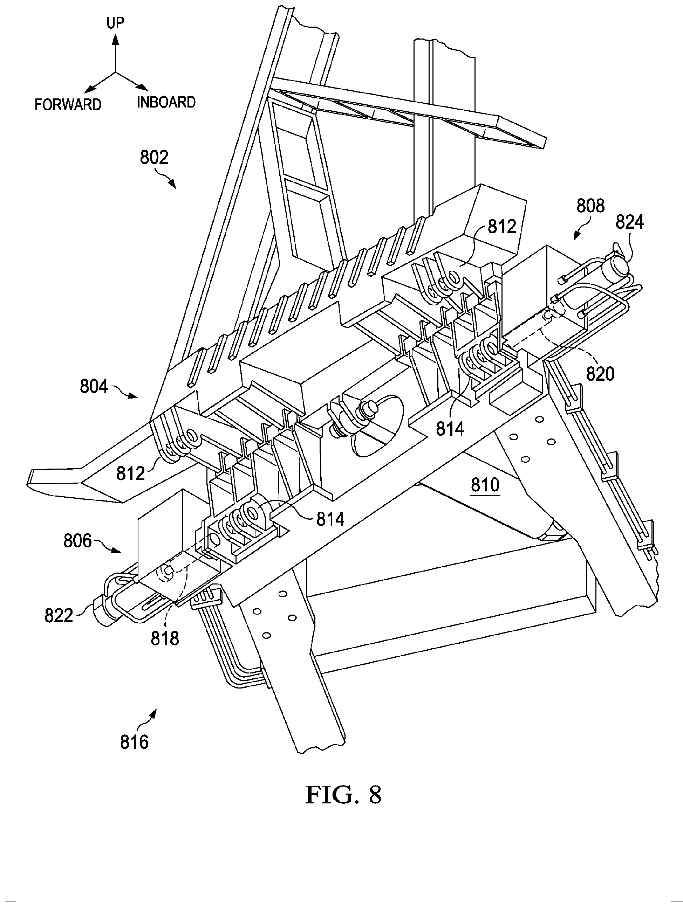

With reference to **Figure 8, Figure 8** is a perspective view diagram of wing fold system with a wing in a folded position in accordance with an illustrative embodiment. More specifically, the side perspective viewpoint looks up and in toward fixed portion **816** of wing fold system **802** in folded position **306.** Wing fold system **802** is shown with unfixed portion **804** of wing **302** raised in folded position **306.**

Wing fold system **802** may include: unfixed portion **804,** first latch **806,** second latch **808,** fold actuator **810,** wingtip lug **812** of group of lugs **422,** inner lug **814** of group of lugs **422,** and fixed portion **816,** a first latch pin **818,** and a second latch pin **820.**

First latch **806** and second latch **808** may each be examples of latch **412** in group of latches **410** as shown in **Figure 4****.** Unfixed portion **804** may be in folded position **306** due to extension of fold actuator **810** while first latch pin **818** within first latch **806** and second latch pin **820** within second latch **808** may each be retracted to open position **414,** by first latch actuator **822** and second latch actuator **824** respectively. First latch actuator **822** and second latch actuator **824** may each be an example of latch actuator **432** in **Figure 4****.** In open position **414,** each latch actuator may retract its respective latch pin from engagement with group of lugs **422,** such as wingtip lug **812** on unfixed portion **804** and inner lug **814** on fixed portion **816.**

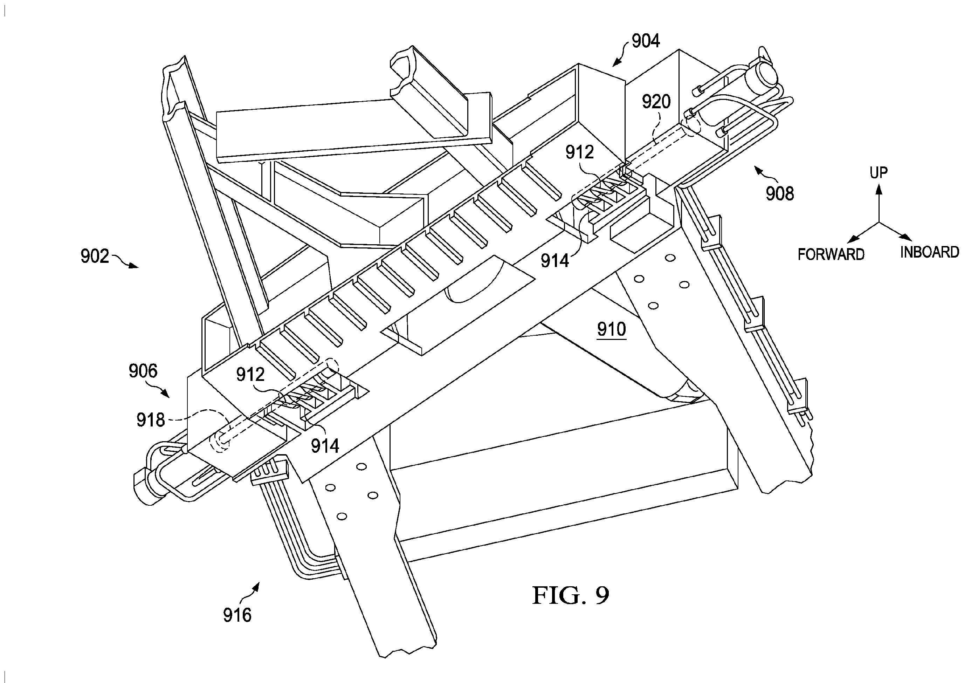

With reference to **Figure 9, Figure 9** is a perspective view diagram of wing fold system with a wing in a flight position in accordance with an illustrative embodiment. More specifically, **Figure 9** presents a view looking up and in toward wing fold system **902** with unfixed portion **904** of wing **302** lowered in flight position **304.** First latch **906** and second latch **908** may each be in closed position **416.** First latch **906** and second latch **908** may each be examples of latch **412** in group of latches **410** as shown in **Figure 4****.** Retraction of an extension member of fold actuator **910** may have moved unfixed portion **904** to flight position **304.** First latch pin **918** within first latch **906** and second latch pin **920** within second latch **908** may have been extended to closed position **416** by their respective latch actuator **432.** In closed position **416,** each latch actuator **432** may extend its latch pin **434** from engagement with group of lugs **422,** such as wingtip lug **912** on unfixed portion **904** and inner lug **914** on fixed portion **916.**

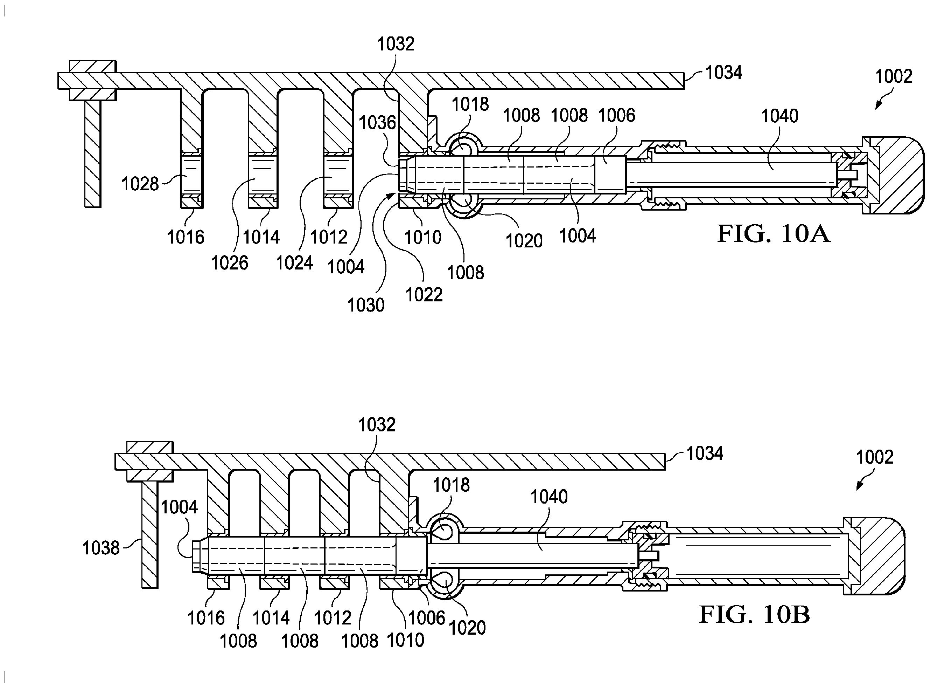

With reference to **Figure 10, Figure 10** is a top view cutaway diagram of a latch pin from a latch of a wing fold system in accordance with an illustrative embodiment. **Figure 10A** illustrates the latch pin with the latch in an open position, and **Figure 10B** illustrates the latch pin with the latch in a closed position.

With reference to **Figure 10A, Figure 10A** illustrates the latch pin with the latch in an open position. More specifically, **Figure 10A****,** depicts latch pin **1002** in open position **414.** In **Figure 10A****,** latch pin **1002** is shown of with an inner pin **1004,** and an outer pin **1006.** Outer pin **1006** may be a solid pin, or as shown in **Figure 10****,** outer pin **1006** may be group of stacked pins **1008.** A first latch pin may be located at a front spar of wing **302.** A second latch pin may be located at a rear spar of wing **302.**

Group of lugs **422** for fixed portion **1034** may include a quantity greater than one inner lug **428** as shown in **Figure 4****.** Illustrative embodiments may provide for group of lugs **422** for fixed portion **1034,** that may include a quantity of four inner lug **428** as shown in **Figure 10** as inner lug **1010,** inner lug **1012,** inner lug **1014,** and inner lug **1016.** For clarity of viewing of group of stacked pins **1008,** group of lugs **422** for unfixed portion **308,** which may interleave with group of lugs **422** from fixed portion **1034,** are not shown in **Figure 10****.**

Group of lugs **422** for unfixed portion **308** may include a quantity greater than one wingtip lug **424.** A quantity of three wingtip lug **424.** Latch pin **1002** being configured including outer pin **1006,** inner pin **1004,** the quantity of four inner lug **428,** and the quantity of three wingtip lug **424** may provide a redundancy for providing a load path between unfixed portion **308** and fixed portion **312** that may be equal or greater than current systems and methods, such as but not limited to those that may use eight latch pins that may slide through three or more lugs. First lock **1018,** and second lock **1020** may provide redundancy to ensure that latch pin **1002** in closed position **416,** as shown in Figure 4, will remain in closed position **416** until commanded to open position **414.**

Group of stacked pins **1008** may be configured such that group of stacked pins **1008** may not be directly in contact with inner pin **1004.** An inner diameter of outer pin **1006** may be greater than an outer diameter of inner pin **1004.** A space may separate inner pin **1004** from outer pin **1006** such that a load on outer pin is not applied to inner pin while the space between inner pin **1004** and outer pin **1006** exists.

Inner pin **1004** may have a retention nut **1036** connected at an end of inner pin **1004.** Retention nut **1036** may provide a barrier that may assist retraction of group of stacked pins **1008** when inner pin **1004** is retracted. Retention bolt **1038** may extend from fixed portion **1034** across an extended diameter of opening **1028.** If any part of inner pin **1004** were to become disconnected from latch actuator **1040,** retention bolt **1038** may retain the part from exiting latch pin **1002** beyond retention bolt **1038.**

Outer pin **1006** being over inner pin **1004** may provide a secondary strength for latch pin **1002.** If one of inner pin **1004** or outer pin **1006** were unable to provide a load path, the other may be configured as strong enough to provide the load path. Redundant ability to carry the load path may keep group of lugs **422** in an interlaced engagement that may hold wing **302** in flight position **304.** Outer pin **1006** including stacked pins **1008,** instead of being a single element outer pin **1006,** may add a further layer of redundancy to latch **412.** If any one of the stacked pins **1008** were to unable to provide the load path, the other stacked pins may still be intact, and may provide load bearing capacity for outer pin **1006** for each of the undamaged stacks. Similarly, any abnormal load on any individual lug in group of lugs **422** may remain isolated at that lug by the stacked pin associated with the individual lug.

Providing layers of redundancy in each latch pin **434,** may allow wing fold system **402** to hold unfixed portion **308** in flight position **304** without requiring space within, or adding weight to wing **302** that may be required by an additional latch system to provide redundancy. Less space and weight required allow wing **302** to be narrower and lighter, which may increase wing **302** performance and aircraft fuel efficiency. Inner pin **1004** being configured to only provide the load path when outer pin **1006** is unable to provide the load path may allow inner pin **1004** to be configured of a size, material, and strength to provide the load path until inspection and/or repair of outer pin **1006** is available. Size and strength of inner pin **1004** may be less than that required for single pin latches in current wing fold designs.

In open position **414** latch pin **1002** may be retracted from engagement with group of lugs **422** connected to fixed portion **1034** of wing **302,** which may include inner lug **1010,** inner lug **1012,** inner lug **1014,** and inner lug **1016.** Inner lug **1010,** inner lug **1012,** inner lug **1014,** and inner lug **1016** may each be an example of an embodiment of inner lug **428** shown in **Figure 4****.** Inner lug **1010,** inner lug **1012,** inner lug **1014,** and inner lug **1016** may each include a respective opening **1022,** opening **1024,** opening **1026,** and opening **1028.**

In open position **414,** end **1030** of latch pin **1002** may be retracted to fill opening **1022,** but may not extend beyond edge **1032** of inner lug **1010.** In open position **414,** latch pin **1002** may be retracted from group of lugs **422** sufficiently to allow wingtip lug **424** to pass into spaces between inner lug **1010,** inner lug **1012,** inner lug **1014,** and inner lug **1016,** and unfixed portion **308** of wing **302** connected to wingtip lug **424** may transition between folded position **306** and flight position **304.**

In open position **414,** as shown in figure 10A, first lock **1018** may be in first disengaged position **506.** In open position **414,** as shown in **Figure 10A****,** second lock **1020** may be in second disengaged position **606.**

With reference to **Figure 10B, Figure 10B** illustrates the latch pin with the latch in a closed position. More specifically, latch pin **1002** is shown in closed position **416.** In closed position **416** latch pin **1002** may be retracted from engagement with group of lugs **422** connected to fixed portion **312** of wing **302,** which may include inner lug **1010,** inner lug **1012,** inner lug **1014,** and inner lug **1016.** Inner lug **1010,** inner lug **1012,** inner lug **1014,** and inner lug **1016** may each be an example of an embodiment of inner lug **428** shown in **Figure 4****.** In closed position **416,** latch pin **1002** may be engaged with group of lugs **422** sufficiently to also engage with any wingtip lug **424** in spaces between inner lug **1010,** inner lug **1012,** inner lug **1014,** and inner lug **1016,** such that unfixed portion **308** of wing **302** connected to wingtip lug **424** may not move from flight position **304.**

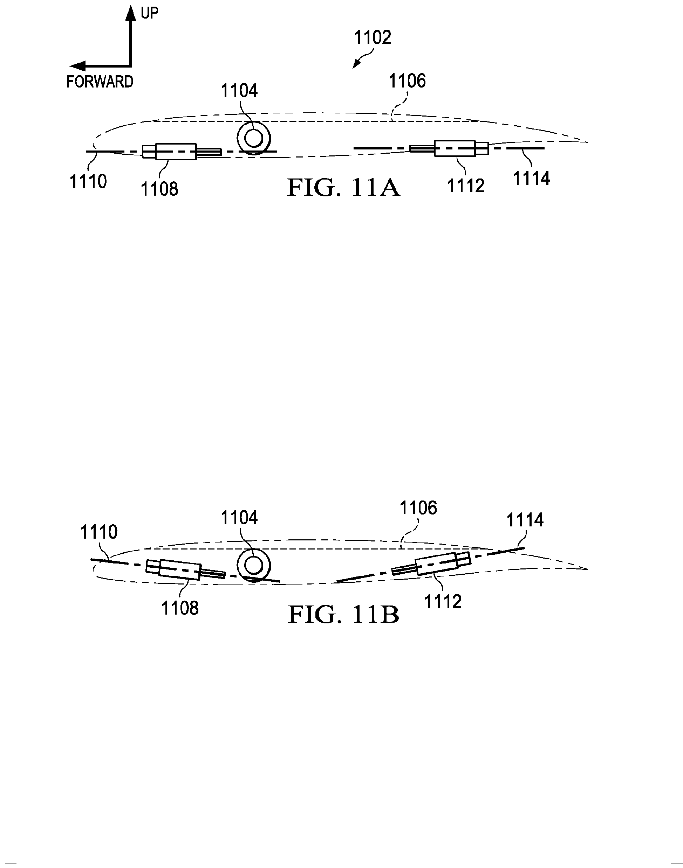

With reference to **Figure 11****,** a side view diagram of a wing with a first latch pin and a second latch pin is depicted in accordance with an illustrative embodiment. **Figure 11A** is a side view diagram with a first central axis of the first latch pin and a second central axis of the second latch pin each being aligned substantially parallel to a centerline of rotation of an unfixed portion of the wing. **Figure 11B** is a side view diagram with each central axis canted away from the centerline of rotation of the unfixed portion of the wing.

With reference to **Figure 11A, Figure 11A** is a side view diagram with a first central axis of the first latch pin and a second central axis of the second latch pin each being aligned substantially parallel to a centerline of rotation of an unfixed portion of the wing. **Figure 11B** is a side view diagram with each central axis canted away from the centerline of rotation of the unfixed portion of the wing. More specifically, wing **1102** includes: fold actuator **1104,** centerline of rotation **1106** of unfixed portion **308** of wing **1102,** first latch pin **1108** with a first central axis **1110,** second latch pin **1112** with a second central axis **1114.** Centerline of rotation **1106** in **Figure 11** may be an example of an embodiment of centerline of rotation **706** in **Figure 7****.**

Orienting each latch pin in a generally horizontal alignment instead of in a generally vertical alignment may allow for thinner wing construction. Orienting each latch pin in a horizontal alignment instead of in a vertical alignment may enhance inspection of each latch pin condition or status, and may enhance repair, replacement, or manual activation or locking during maintenance on each latch pin. Similarly, a central axis of each latch pin may be essentially parallel to a length of a rib of wing **1102,** or to an axis of rotation for unfixed portion **904.**

With reference to **Figure 11B, Figure 11B** is a side view diagram with each central axis canted away from the centerline of rotation of the unfixed portion of the wing. More specifically, **Figure 11B** depicts central axis **1110** of first latch pin **1108** and central axis **1114** of second latch pin **1112** each canted downward, in a direction of an extension of the respective latch pin and away from centerline of rotation **1106.**

By canting central axis **1110** and/or central axis **1114,** first latch pin **1108** and/or second latch pin **1112** may be inserted inside wing **1102** without requiring expanding a width of, or changing a shape of wing **1102** to accommodate the first latch pin **1108** and/or the second latch pin **1112.** Without canting central axis **1110** and/or central axis **1114,** as shown in **Figure 11A****,** the dimensions of each latch may exceed extend outside a desired shape and dimension of wing **1102.** Canting central axis **1110** and/or central axis **1114** may allow keeping the desired shape and dimensions of wing **1102** and may allow wing **1102** to be narrower and/or lighter than if central axis **1110** and/or central axis **1114** are substantially parallel to centerline of rotation **1106** for unfixed portion **308** of wing **1102.** Because a trailing edge of wing **1102** may be narrower than a leading edge of wing **1102,** it may be that only the second latch pin, located closer to the trailing edge of wing **302,** may be canted. A narrower and/or lighter wing **1102** may increase wing **1102** performance and efficiency and may increase aircraft **100** fuel efficiency.

Any canted latch pin may still pass through and engage group of lugs **422** in a manner similar to those depicted in **Figure 10A** and **Figure 10B****,** with the exception that opening **1022,** opening **1024,** opening **1026** and opening **1028,** which may be formed within respective inner lug **1010,** inner lug **1012,** inner lug **1014,** and inner lug **1016,** may each be formed at an angle that may be different than those depicted **Figure 10A** and **Figure 10B****,** where the openings are identically shaped with a centerline that may be one of substantially horizontal, and substantially parallel to centerline of rotation **706.** A centerline of each opening may align instead with an angle that may be substantially parallel to a cant angle of their respective latch pin. With a central axis of a latch canted, a shape of each opening may be different than a shape of each other opening to allow for an extension of a respective latch pin to extend and pass through each opening unimpeded.

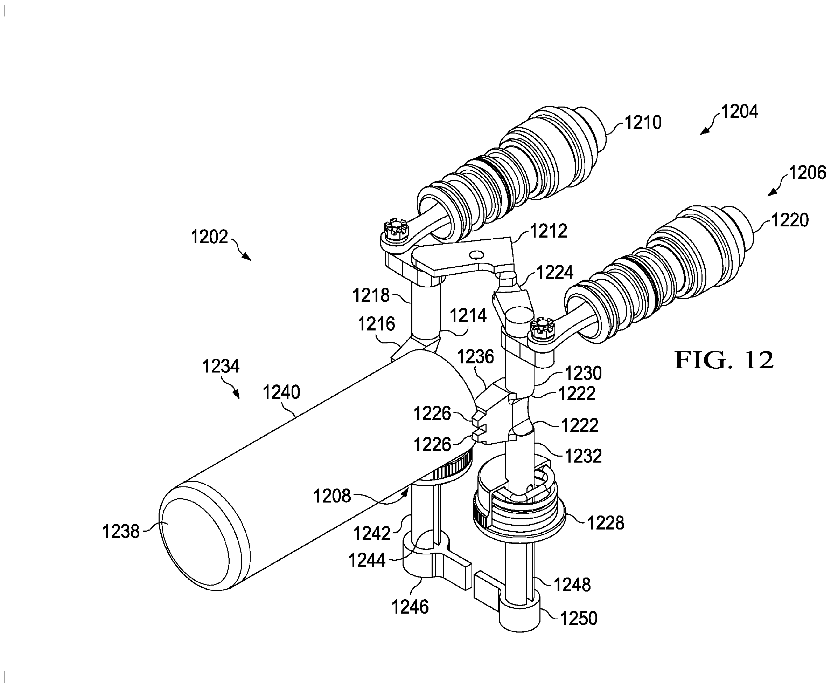

With reference now to **Figure 12****,** a perspective view diagram of selected components of a latch of a wing fold system of a wing is depicted in accordance with an illustrative embodiment. More specifically, a perspective view of selected interior components of latch **1202** of wing fold system **402** is depicted from above in accordance with an illustrative embodiment. Latch **1202** may be an example of an embodiment of latch **412** of **Figure 4** such as second latch **708** of **Figure 7****.**

Latch **1202** may include: first lock **1204,** second lock **1206,** inner pin **1238,** and outer pin **1240.** First lock **1204** may include: first spring **1208,** first piston **1210,** first cam **1212,** group of first connection points **1214,** first lock member **1216,** first shaft **1218,** second shaft **1242,** first slot **1244,** and first knob **1246.**

Group of first connection points **1214** may provide redundant features for latch **1202.** Redundant features provided may include managed and sequenced shearing of first shaft **1218** and second shaft **1242** from first lock member **1216.** First connection points **1214** may provide a stronger connection between first lock member **1216** and second shaft **1242** than first connection points **1214** provide between first lock member **1216** and first shaft **1218.** Therefore, a shear force imparted to first lock member **1216** may result in a shear separation between first lock member **1216** and first shaft **1218** before a shear separation occurs between first lock member **1216** and second shaft **1242.**

Thus, if first lock member **1216** shears apart from first shaft **1218,** operation of first cam **1212** and second cam **1224** may be unaffected. Nonetheless, if first lock member **1216** shears apart from first shaft **1218,** then a position of first lock member **1216** may be independent of and unaffected by movements of first cam **1212** and second cam **1224.**

If latch pin **1234** is in closed position **416** when first lock member **1216** shears from first shaft **1218,** then first spring **1208** may apply a force that may act on first lock member **1216** and may hold first lock member **1216** in first engaged position **504** against latch pin **1234.** Despite a position of or an indication of a position of first cam **1212,** a visual inspection of first slot **1244** in second shaft **1242** may indicate that first lock member **1216** may be in first engaged position **504** against latch pin **1234.**

Accordingly, if latch pin **1234** is in open position **414** when first lock member **1216** shears from first shaft **1218,** then, despite a position of or an indication of a position of first cam **1212,** a visual inspection of first slot **1244** in second shaft **1242** may indicate an actual position for first lock member **1216,** such as being in first disengaged position **506.**

Additionally, if first lock member **1216** shears from first shaft **1218** when latch pin **1234** is in closed position **416,** then any movement of first cam **1212** may be unable to move first lock member **1216** from first engaged position **504** to first disengaged position **506.** If first lock member **1216** shears from first shaft **1218** when latch pin **1234** is in closed position **416,** first knob **1246** may be used to overcome the force from first spring **1208** acting on first lock member **1216.** Thus, first knob **1246** may be used to move first lock member **1216** between first engaged position **504** and first disengaged position **506.** If first knob **1246** is connected to first lock member **1216** through second shaft **1242,** then if latch pin **1234** is in open position **414,** then first knob **1246** may not be able to move.

A redundant feature may be provided by first connection points **1214** between first lock member **1216** and second shaft **1242** being stronger than first connection points **1214** between first lock member **1216** and first shaft **1218.** Thus, force imparted against first lock member **1216** may result in a shear separation at first connection points **1214** instead of transferring force and possible damage up through first shaft **1218** to first cam **1212** or first piston **1210.**

Further, because first connection points **1214** between first lock member **1216** and second shaft **1242** may be stronger than first connection points **1214** between first lock member **1216** and first shaft **1218,** it may be unlikely for a connection between first lock member **1216** and second shaft **1242** to suffer a shear separation without a connection between first lock member **1216** and first shaft **1218** suffering a shear separation first.

If first lock member **1216** shears from second shaft **1242,** then first slot **1244** indications of a position of first lock member **1216** may be unreliable and first knob **1246** may not be used to move first lock member **1216.** However, the redundant feature of first lock member **1216** being spring loaded to first engaged position **504** may be lost. A loss of first lock member **1216** being spring loaded to first engaged position **504** only becomes immediately significant if first lock member **1216** has also sheared from first shaft **1218.** A shear separation of first group of shafts **528** may result in latch pin **1234** being unmovable except through maintenance servicing.

Second lock **1206** may include: second piston **1220,** group of second connection points **1222,** second cam **1224,** group of second nubs **1226,** second spring **1228,** third shaft **1230,** fourth shaft **1232,** latch pin **1234,** second lock member **1236,** and second slot **1248,** and second knob **1250.**

Group of second connection points **1222** may provide redundant features for latch **1202.** Redundant features provided may include managed and sequenced shearing of third shaft **1230** and fourth shaft **1232** from second lock member **1236.** Second connection points **1222** may provide a stronger connection between second lock member **1236** and fourth shaft **1232** than second connection points **1222** provide between second lock member **1236** and fourth shaft **1232.** Therefore, a shear force imparted to second lock member **1236** may result in a shear separation between second lock member **1236** and third shaft **1230** before a shear separation occurs between second lock member **1236** and fourth shaft **1232.**

If latch pin **1234** is in closed position **416** when second lock member **1236** shears from third shaft **1230,** then second spring **1228** may apply a force that may act on second lock member **1236** and may hold second lock member **1236** in second engaged position **604** against latch pin **1234.** Despite a position of or an indication of a position of second cam **1224,** a visual inspection of second slot **1248** in fourth shaft **1232** may indicate that second lock member **1236** may be in second engaged position **604** against latch pin **1234.**

Accordingly, if latch pin **1234** is in open position **414** when second lock member **1236** shears from third shaft **1230,** then, despite a position of or an indication of a position of second cam **1224,** a visual inspection of second slot **1248** in fourth shaft **1232** may indicate an actual position for second lock member **1236,** such as being in second disengaged position **606.**

Additionally, if second lock member **1236** shears from third shaft **1230** when latch pin **1234** is in closed position **416,** then any movement of second cam **1224** may be unable to move second lock member **1236** from second engaged position **604** to second disengaged position **606.** Second cam **1224** movement may allow first cam **1212** movement, and first lock member **1216** may move to first disengaged position **506,** but second spring **1228** may force second lock member **1236** to second engaged position **604** and latch pin **1234** may not move out of closed position **416.**

If second lock member **1236** shears from third shaft **1230** when latch pin **1234** is in closed position **416,** second knob **1250** may be used to overcome the force from second spring **1228** acting on second lock member **1236.** Thus, second knob **1250** may be used to move second lock member **1236** between second engaged position **604** and second disengaged position **606.** If second knob **1250** is connected to second lock member **1236** through fourth shaft **1232,** then if latch pin **1234** is in open position **414,** then second knob **1250** may not be able to move.

A redundant feature may be provided by second connection points **1222** between second lock member **1236** and fourth shaft **1232** being stronger than second connection points **1222** between 36 and third shaft **1230.** Thus, force imparted against second lock member **1236** may result in a shear separation at second connection points **1222** instead of transferring force and possible damage up through third shaft **1230** to second cam **1224** or second piston **1220.**

Further, because second connection points **1222** between second lock member **1236** and fourth shaft **1232** are stronger than second connection points **1222** between second lock member **1236** and third shaft **1230,** it may be unlikely for a connection between second lock member **1236** and fourth shaft **1232** to suffer a shear separation without a connection between second lock member **1236** and third shaft **1230** suffering a shear separation first.

If second lock member **1236** shears from fourth shaft **1232,** and second knob **1250** may not be used to move second lock member **1236.** However, the redundant feature of second lock member **1236** being spring loaded to second engaged position **604** may be lost. A shear separation of second group of shafts **628** may result in latch pin **1234** being unmovable except through maintenance servicing.

With reference to **Figures 13A** through **13D****,** a top plan view diagram of a first cam, a first lock member, a second cam, a second cam member, and a latch pin of a latch is depicted in accordance with an illustrative embodiment.

**Figure 13A** depicts the latch in closed position, with the first lock member and the second lock member engaged with latch pin, **Figure 13B** depicts the second locked member disengaging from the latch pin as first lock member remains engage with the latch pin, **Figure 13C** depicts the second locked member further disengaging from the latch pin as first lock member disengages from the latch pin, and **Figure 13D** depicts both the first lock member and the second lock member fully disengaged from the latch pin before the latch pin moves from closed position.

With reference to **Figure 13A****,** a top plan view diagram depicts latch **1302** in closed position. Latch **1302** may be an example of an embodiment of latch **412** of **Figure 4****.** Selected items of latch **1302** are depicted, which may include: first lock member **1304,** first surface **1306,** second surface **1308,** roller **1310,** group of first nubs **1312,** first cam **1314,** first contact member **1316,** second contact member **1318,** second cam **1320,** second lock member **1322,** third surface **1324,** fourth surface **1326,** group of second nubs **1328,** and latch pin **1330.**

Each of **Figure 13A** through **Figure 13D****,** is a relational illustration to show the reactive movements of first lock member **1304** and second lock member **1322** as first cam **1314** and second cam **1320** move. For this relational illustrative purpose only, each lock member appears to be above each cam in **Figure 13A** through **Figure 13D****.** In operation, first cam **1314** may be above first lock member **1304,** with first cam **1314** directly connected to a top end of second shaft **532** and first lock member **1304** directly connected to a bottom end of second shaft **532.** In operation, second cam **1320** may be above second lock member **1322** with second cam **1320** directly connected to a top end of fourth shaft **632** and second lock member **1322** directly connected to a bottom end of fourth shaft **632.** In operation, latch pin **1330** may be below, and may not contact first cam **1314** or second cam **1320.** In operation, latch pin **1330** may be at the same level as first lock member **1304** and second lock member **1322** and may contact first lock member **1304** and/or second lock member **1322.**

**Figure 13A** shows first contact member **1316** immobilized by second contact member **1318,** first lock member **1304** in first engaged position **504,** and second lock member **1322** in second engaged position **604.** The relative positions shown in **Figure 13A** may occur when first spring **508** may be forcing first lock member **1304** into first engaged position **504,** and second spring **608** may be forcing second lock member **1322** into second engaged position **604.** In these positions, first lock member **1304** may prevent latch pin **1330** from moving out of closed position **416,** as shown, toward open position **414.** In these positions, second lock member **1322** may redundantly prevent latch pin **1330** from moving out of closed position **416,** as shown, toward open position **414.** Contact of second contact member **1318** against first contact member **1316** may prevent movement of first cam **1314,** regardless of any pressure that may be applied to first cam **1314** by first piston 510.

Group of first nubs **1312** may stop first spring 508 from moving first lock member **1304** further toward a center of latch pin **1330.** If first lock member **1304** were allowed to rotate further toward the center of latch pin 1330, then first contact member **1316** may rotate away from contacting second contact member **1318._**Group of second nubs **1328** may stop second spring **608** from moving second lock member **1322** further toward a center of latch pin **1330.** If second lock member **1322** were allowed to rotate further toward the center of latch pin **1330,** then second contact member **1318** may rotate away from contacting first contact member **1316,** thus the second contact member **1318** may not provide a redundant means of preventing movement of first lock member **1304** out of first engaged position **504** until after second lock member **1322** may move out of second engaged position **604.** Thus, group of first nubs **1312,** and group of second nubs **1328,** may facilitate sequencing of first lock member **1304** and second lock member **1322** with latch pin **1330,** such that first lock member **1304** may not move out of first engaged position **504** until after second lock member **1322** may move out of second engaged position **604.**

**Figure 13B** shows that second cam **1320** may rotate toward latch pin **1330,** and second contact member **1318** may move off first contact member **1316** of first cam **1314.** Second cam **1320** rotation may be driven by second piston **610.** Concurrently, second lock member **1322** may move off latch pin **1330.** As second contact member **1318** moves off first contact member **1316,** first piston **510** may force first cam **1314** to begin to rotate so that first lock member **1304** may begin to move away from latch pin **1330.** Further rotation of first cam **1314** may still be blocked, as shown in **Figure 13B****,** by second cam **1320** position. A position of first lock member **1304,** as shown in **Figure 13B****,** may still impede retraction of latch pin **1330,** and may impede latch pin **1330** from moving to open position **414.**

**Figure 13C** shows that second cam **1320** may rotate further toward latch pin **1330,** and second contact member **1318** may move away from first contact member **1316.** First piston **510** may force first cam **1314** to rotate so that first lock member **1304** may move away from latch pin **1330.** Further rotation of first cam **1314** may still be blocked, as shown in **Figure 13C****,** by second cam **1320** position. A position of first lock member **1304,** as shown in **Figure 13C****,** may no longer block latch pin **1330** from moving away from closed position **416** toward open position **414.**

**Figure 13D** shows second contact member **1318** fully rotated away from first contact member **1316.** Concurrently, second lock member may be rotated fully to second disengaged position **606.** In this position, fourth surface **1326** of second lock member **1322** is aligned with a circumference of latch pin **1330** so that as latch pin **1330** moves toward open position **414,** toward the right side of the diagram, second lock member **1322** may not inhibit movement of latch pin **1330.**

With second cam **1320** rotated to position shown in **Figure 13D****,** first piston **510** may pull first cam **1314** to the position shown in **Figure 13D****,** and thus may rotate first lock member **1304** to first disengaged position **506,** as shown in **Figure 13D****.** With first lock member **1304** in first disengaged position **506,** when latch pin **1330** moves toward open position **414,** latch pin **1330** may contact roller **1310** on first lock member **1304,** but second surface **1308** may be aligned with a circumference of latch pin **1330** so that latch pin **1330** movement toward open position **414** may not be inhibited.

With second cam **1320** rotated to position shown in **Figure 13D****,** second cam **1320** may not be able to rotate back toward the second cam **1320** position shown in **Figure 13C** until first spring **508** may force first cam **1314** toward the position shown for first cam **1314** in **Figure 13C****.** When first lock member **1304** and second lock member **1322** are in the positions shown in **Figure 13D****,** if latch pin **1330** is moved to right of diagram so that it passes between first lock member **1304** and second lock member **1322,** then no motion of first cam **1314** or second cam **1320** may be possible until latch pin **1330** is moved back toward left of diagram, and fully to the left of second surface **1308** and fourth surface **1326.**

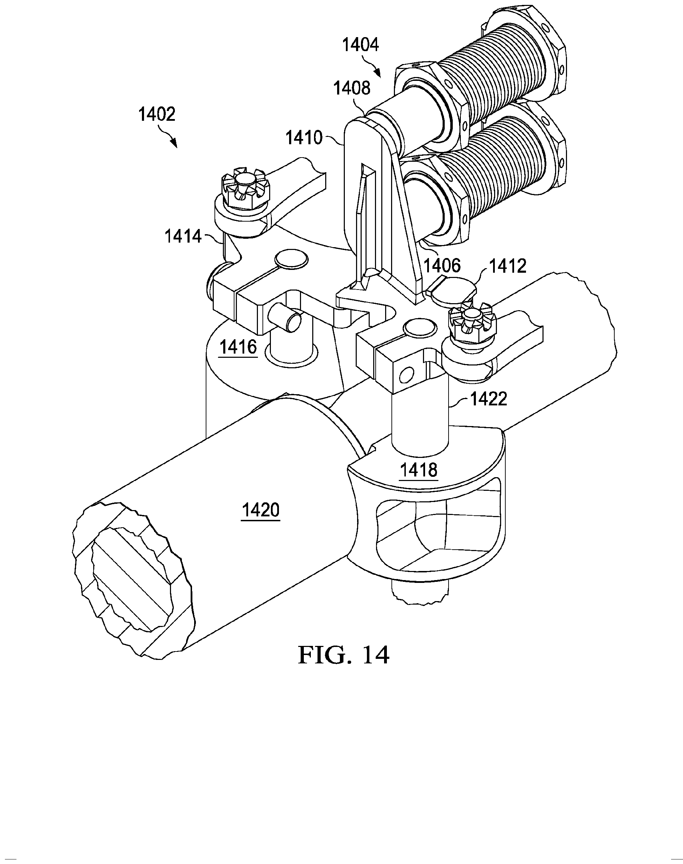

With reference to **Figure 14****,** a perspective view of a locked sensor for a latch on a wing fold system is depicted in accordance with an illustrative embodiment. More specifically, a perspective view looking down upon locked sensor **1404** of latch **1402** is shown. Locked sensor **1404** may be an example of an embodiment of locked sensor **636** of **Figure 6****.**

Locked sensor **1404** may include: first sensor **1406,** second sensor **1408,** target **1410,** and second cam **1412.** First sensor **1406** and second sensor **1408** may be identical sensing units, or sensing units of different design. Each sensing unit may operate using at least one of: ultrasonic sensing, electronic sensing, mechanical sensing, optical sensing, any other sensing system that may be appropriate, or any combination thereof. Target **1410** may be connected to and may extend upward from second cam **1412.**

When second cam **1412** is in second engaged position **604,** first sensor **1406** and second sensor **1408** may be activated by presence of target **1410.** Because, as shown above in **Figure 13A** through **13D****,** second cam **1412** may not be in second engaged position **604** unless first cam **1414** is in first engaged position **504,** target **1410** activating first sensor **1406** and second sensor **1408** may also be an indication that first cam **1414** is in first engaged position **504.**

When second cam **1412** is moved out of second engaged position **604,** target **1410** moves away from first sensor **1406** and second sensor **1408,** and locked sensor **1404** may not indicate that latch **1402** is in closed position **416** with first lock member **1416** in first engaged position **504** and second lock member **1418** in second engaged position **604,** with latch pin **1420** extended into closed position **416.**

As discussed for **Figure 12** above, third shaft **1422** may shear from second lock member **1418.** If that shear occurs, then a position of second cam **1412** may not be indicative of a position of second lock member **1418.** Thus, target **1410** may move away from first sensor **1406** and second sensor **1408,** and locked sensor **1404** may incorrectly perceive that second lock member **1418** is not in second engaged position **604.** Actual position of second lock member **1418** may be determined by viewing second slot **634** if fourth shaft **432** has not sheared from second lock member **1418.**

Evaluation of various combinations of malfunctions of latch **1402** may be derived from a observing a combination of locked sensor **1404** indications, first slot **534,** second slot **634,** and latch pin **1420** locations. First spring **508** functions to hold first lock member **1416** in first engaged position **504** and second spring **608** functions to hold second lock member **1418** in second engaged position **604** so that the system may react to most likely shear separations by holding latch pin **1420** in closed position **416.**

Thus, wing **302** may be maintained in flight position **304,** which is a desirable redundant feature using wing **302** in flight. Additionally, an unexpected operation of latch pin **1420** that may deny ability to fold wing **302** may be addressed by not taxing an aircraft until wing **302** may be folded up by maintenance service or other procedures.

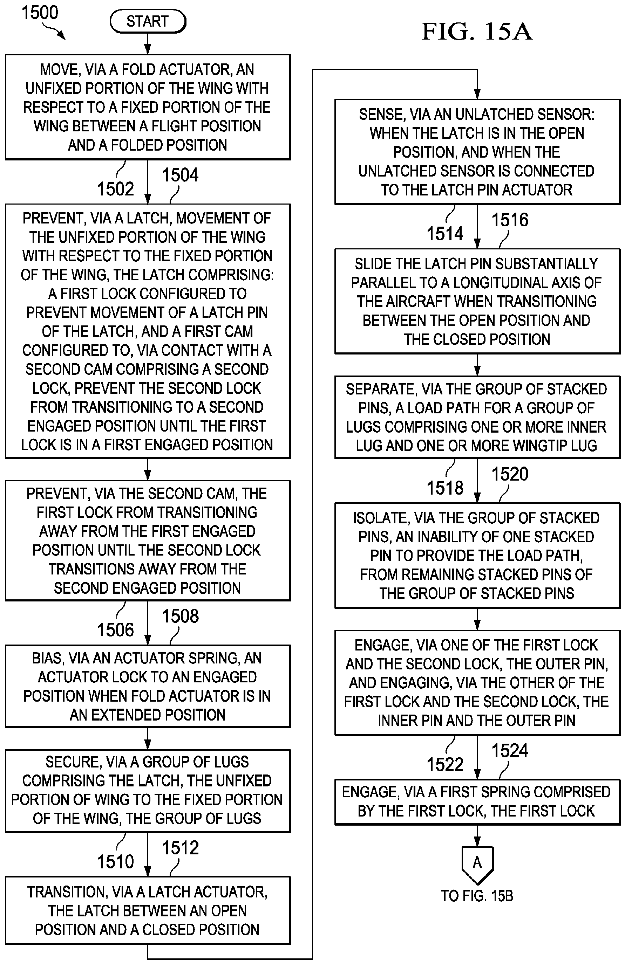

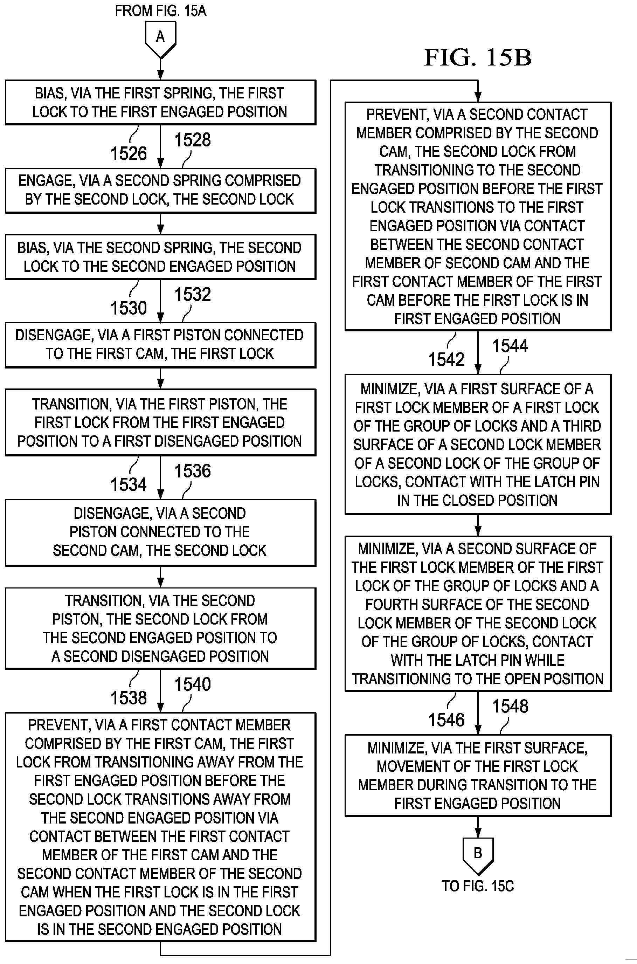

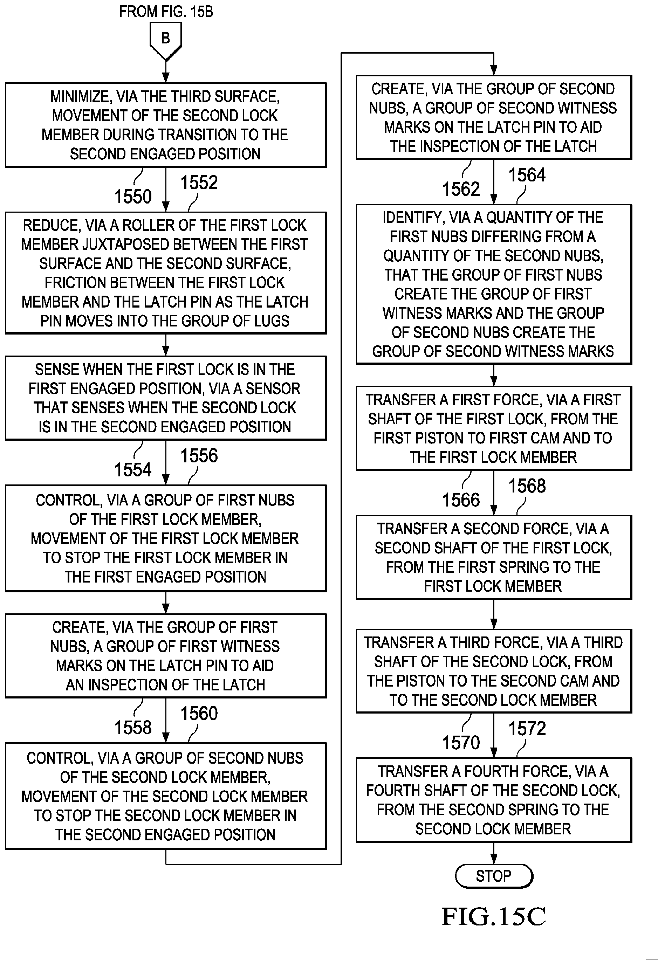

With reference to **Figure 15, Figure 15** is a diagram of operations for a method of a wing fold system in accordance with an illustrative embodiment. The method may start with operation **1502** and end after operation **1572.** **Figure 15A** shows operations **1502** to **1524** of the method; **Figure 15B** shows operations **1526** to **1548** of the method; and **Figure 15C** shows operations **1550** to **1572** of the method. The various features and elements of the embodiment of **Figure 15** that are used to describe the method **1500** for folding and unfolding the wing of an aircraft, may correspond to similarly named features and elements of embodiments depicted in the other figures of this application.

Operations listed for method **1500** may be performed in order other than that presented. Some operations may be performed simultaneously. Some operations may be omitted. Operations other than those listed may be added. Performance of some operations, or ordering of operations, may be dependent upon a beginning state of the wing, such as flight position or folded position, or being in transition between states.

Method **1500** may include operations listed below. Moving, via a fold actuator, an unfixed portion of the wing with respect to a fixed portion of the wing between a flight position and a folded position (operation **1502**). Method **1500** may include preventing, via a latch, movement of the unfixed portion of the wing with respect to the fixed portion of the wing, the latch comprising: a first lock configured to prevent movement of a latch pin of the latch, and a first cam configured to, via contact with a second cam comprising a second lock, prevent the second lock from transitioning to a second engaged position until the first lock is in a first engaged position (operation **1504**). Further, method **1500** may include preventing, via the second cam, the first lock from transitioning away from the first engaged position until the second lock transitions away from the second engaged position (operation **1506**).

Method **1500** may include biasing, via an actuator spring, an actuator lock to an engaged position when fold actuator is in an extended position (operation **1508**). Method **1500** may include securing, via a group of lugs comprising the latch, the unfixed portion of wing to the fixed portion of the wing, the group of lugs (operation **1510).** The group of lugs may include: one or more wingtip lug, each wingtip lug attached to the unfixed portion of the wing and each comprising a first opening that coincides with a second opening of an inner lug when the wing is in a flight position; and one or more inner lug, each inner lug attached to the fixed portion of the wing and each comprising the second opening that coincides with the first opening of a wingtip lug.

Method **1500** may also include transitioning, via a latch actuator, the latch between an open position and a closed position (operation **1512**); and sensing, via an unlatched sensor: when the latch is in the open position, and when the unlatched sensor is connected to the latch pin actuator (operation **1514**). Method **1500** also may include sliding the latch pin substantially parallel to a longitudinal axis of the aircraft when transitioning between the open position and the closed position (operation **1516**). The latch pin may include: an inner pin within an outer pin, the inner pin providing a secondary load path if outer pin is unable to provide a load path, the inner pin not providing the load path for the outer pin until the outer pin is unable to provide the load path. The outer pin may comprise a group of stacked pins.

Method **1500** may include separating, via the group of stacked pins, a load path for a group of lugs comprising one or more inner lug and one or more wingtip lug (operation **1518),** and isolating, via the group of stacked pins, an inability of one stacked pin to provide the load path, from remaining stacked pins of the group of stacked pins (operation **1520**). Method **1500** may also include engaging, via one of the first lock and the second lock, the outer pin, and engaging, via the other of the first lock and the second lock, the inner pin and the outer pin (operation **1522**).

Additionally, method **1500** may include engaging, via a first spring comprised by the first lock, the first lock (operation **1524**); biasing, via the first spring, the first lock to the first engaged position (operation **1526**); engaging, via a second spring comprised by the second lock, the second lock (operation **1528**); and biasing, via the second spring, the second lock to the second engaged position (operation **1530**). Further, method **1500** may include disengaging, via a first piston connected to the first cam, the first lock (operation **1532**); transitioning, via the first piston, the first lock from the first engaged position to a first disengaged position (operation **1534**); disengaging, via a second piston connected to the second cam, the second lock (operation **1536**); and transitioning, via the second piston, the second lock from the second engaged position to a second disengaged position (operation **1538**).

Method **1500** may include preventing, via a first contact member comprised by the first cam, the first lock from transitioning away from the first engaged position before the second lock transitions away from the second engaged position via contact between the first contact member of the first cam and the second contact member of the second cam when the first lock is in the first engaged position and the second lock is in the second engaged position (operation **1540**). Method **1500** may also include preventing, via a second contact member comprised by the second cam, the second lock from transitioning to the second engaged position before the first lock transitions to the first engaged position via contact between the second contact member of second cam and the first contact member of the first cam before the first lock is in first engaged position (operation **1542**).

Method **1500** may include minimizing, via a first surface of a first lock member of a first lock of the group of locks and a third surface of a second lock member of a second lock of the group of locks, contact with the latch pin in the closed position (operation **1544**); minimizing, via a second surface of the first lock member of the first lock of the group of locks and a fourth surface of the second lock member of the second lock of the group of locks, contact with the latch pin while transitioning to the open position (operation **1546**); minimizing, via the first surface, movement of the first lock member during transition to the first engaged position (operation **1548**); and minimizing, via the third surface, movement of the second lock member during transition to the second engaged position (operation **1550**). Additionally, method **1500** may include reducing, via a roller of the first lock member juxtaposed between the first surface and the second surface, friction between the first lock member and the latch pin as the latch pin moves into the group of lugs (operation **1552**). Method **1500** may also include sensing when the first lock is in the first engaged position, via a sensor that senses when the second lock is in the second engaged position (operation **1554)** .

Method **1500** may include controlling, via a group of first nubs of the first lock member, movement of the first lock member to stop the first lock member in the first engaged position (operation **1556**); creating, via the group of first nubs, a group of first witness marks on the latch pin to aid inspection of the latch (operation **1558**); controlling, via a group of second nubs of the second lock member, movement of the second lock member to stop the second lock member in the second engaged position (operation **1560);** and creating, via the group of second nubs, a group of second witness marks on the latch pin to aid the inspection of the latch (operation **1562**). Accordingly, method **1500** may include identifying, via a quantity of the first nubs differing from a quantity of the second nubs, that the group of first nubs creates the group of first witness marks and the group of second nubs creates the group of second witness marks (operation **1564**)**.**

Method **1500** may include transferring forces from one component to another. Transferring forces may specifically include: transferring a first force, via a first shaft of the first lock, from the first piston to first cam and to the first lock member (operation **1566**); transferring a second force, via a second shaft of the first lock, from the first spring to the first lock member (operation **1568**); transferring a third force, via a third shaft of the second lock, from the piston to the second cam and to the second lock member (operation **1570**); and transferring a fourth force, via a fourth shaft of the second lock, from the second spring to the second lock member (operation **1572**). The first force may be great enough to overcome the second force. The third force may be great enough to overcome the fourth force. Thus, second piston may need to be operative for second cam to move and for latch to move to open position.

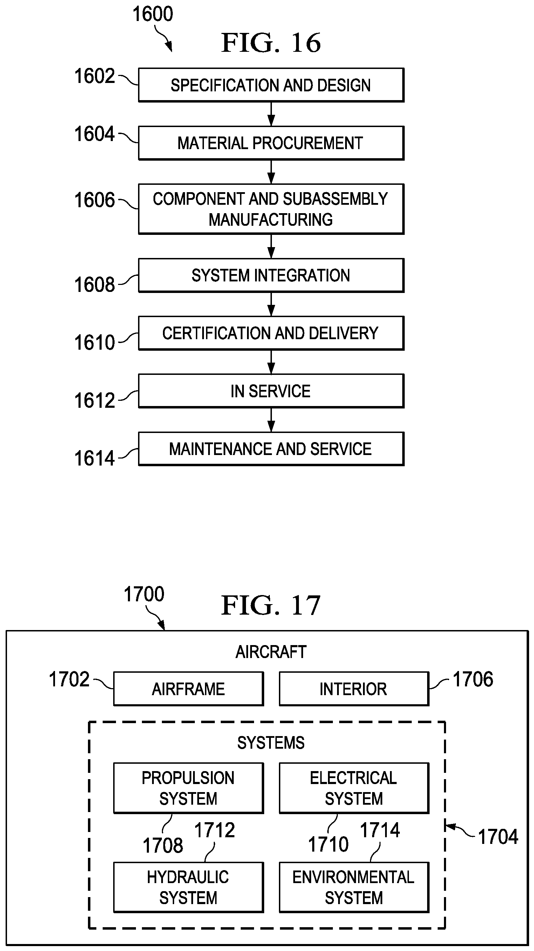

Illustrative embodiments of the disclosure may be described in the context of aircraft manufacturing and service method **1600** as shown in **Figure 16** and aircraft **1700** as shown in **Figure 17****.** Turning first to **Figure 16****,** an illustration of an aircraft manufacturing and service method is depicted in accordance with an illustrative embodiment. During pre-production, aircraft manufacturing and service method **1600** may include specification and design **1602** of aircraft **1700** in **Figure 17** and material procurement **1604.**

During production, component and subassembly manufacturing **1606** and system integration **1608** of aircraft **1700** in **Figure 17** takes place. Thereafter, aircraft **1700** in **Figure 17** may go through certification and delivery **1610** in order to be placed in service **1612.** While in service **1612** by a customer, aircraft **1700** in **Figure 17** may be scheduled for routine maintenance and service **1614,** which may include modification, reconfiguration, refurbishment, and other maintenance or service.

Each of the processes of aircraft manufacturing and service method **1600** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 17****,** an illustration of an aircraft is depicted in which an illustrative embodiment may be implemented. In this example, aircraft **1700** may be produced by aircraft manufacturing and service method **1600** in **Figure 16** and may include airframe **1702** with plurality of systems **1704** and interior **1706.** Examples of systems **1704** may include one or more of propulsion system **1708,** electrical system **1710,** hydraulic system **1712,** and environmental system **1714.** Any number of other systems may be may included. Although an aerospace example may be shown, different illustrative embodiments may be applied to other industries, such as the automotive industry.

Apparatuses and methods embodied herein may be employed during at least one of the stages of aircraft manufacturing and service method **1600** in **Figure 16****.**

In one illustrative example, components or subassemblies produced in component and subassembly manufacturing **1606** in **Figure 16** may be fabricated or manufactured in a manner similar to components or subassemblies produced while aircraft **1700** may be in service **1612** in **Figure 16****.** As yet another example, one or more apparatus embodiments, method embodiments, or a combination thereof may be utilized during production stages, such as component and subassembly manufacturing **1606** and system integration **1608** in **Figure 16****.** One or more apparatus embodiments, method embodiments, or a combination thereof may be utilized while aircraft **1700** may be in service **1612** and/or during maintenance and service **1614** in **Figure 16****.** The use of a number of the different illustrative embodiments may substantially expedite the assembly of and/or reduce the cost of aircraft **1700.**

The flowcharts and block diagrams in the different depicted illustrative embodiments illustrate the architecture, functionality, and operation of some possible implementations of apparatuses and methods Illustrative embodiments provide for. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, blocks may be removed from and other blocks may be added in addition to the illustrated blocks in a flowchart or block diagram.

The description of the different illustrative embodiments has been presented for purposes of illustration and description, and may be not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method of folding a wing (102, 104) of an aircraft (100), the method comprising:
moving, via a fold actuator, an unfixed portion (120, 122, 804) of the wing (102, 104) with respect to a fixed portion (124, 126, 816) of the wing (102, 104) between a flight position (304) and a folded position (306);
preventing, via a latch (412, 806), movement of the unfixed portion (120, 122, 804) of the wing (102, 104) with respect to the fixed portion (124, 126, 816) of the wing (102, 104), the latch (412, 806) comprising: a first lock (502, 1204) configured to prevent movement of a latch pin (434, 818) of the latch (412, 806), and a first cam (512, 1212) configured to, via contact with a second cam (612, 1224) comprising a second lock (602, 1206), prevent the second lock (602, 1206) from transitioning to a second engaged position (604) until the first lock (502, 1204) is in a first engaged position (504); and
preventing, via the second cam (612, 1224), the first lock (502, 1204) from transitioning away from the first engaged position (504) until the second lock (602, 1206) transitions away from the second engaged position (604);
the method **characterized by**:
sliding the latch pin (434, 818) substantially parallel to a longitudinal axis of the aircraft (100) when transitioning between an open position (414) and a closed position (416);
wherein the latch pin (434, 818) may include:
an inner pin (438, 1004) within an outer pin (440, 1034);
the inner pin (438, 1004) providing a secondary load path if outer pin (440, 1034) is unable to provide a load path;
the inner pin (438, 1004) not providing the load path until the outer pin (440, 1034) is unable to provide the load path;
the outer pin (440, 1034) comprising a group of stacked pins (442, 1008);
engaging, via one of the first lock (502, 1204) and the second lock (602, 1206), the outer pin (440, 1034);
engaging, via the other of the first lock (502, 1204) and the second lock (602, 1206), the inner pin (438, 1004) and the outer pin (440, 1034);
separating, via the group of stacked pins (442, 1008), the load path for a group of lugs (422, 1010, 1012, 1014, 1016) comprising one or more inner lug (428, 1010, 1012, 1014, 1016) and one or more wingtip lug (424, 812); and
isolating, via the group of stacked pins (442, 1008), an inability of one stacked pin, from remaining stacked pins of the group of stacked pins (442, 1008), to provide the load path.

2. The method of claim 1, further comprising:
biasing, via an actuator spring (408), an actuator lock (406) to an engaged position when the fold actuator (404) is in an extended position.

3. The method of any preceding claim, further comprising:
securing, via a group of lugs (422) comprising the latch (412), the unfixed portion (120, 122) of wing (102, 104) to the fixed portion (124, 126) of the wing (102, 104), the group of lugs (422) comprising:
one or more wingtip lug (424), each wingtip lug (424) attached to the unfixed portion (120, 122) of the wing (102, 104) and each comprising a first opening that coincides with a second opening of an inner lug (428) when the wing (102, 104) is in a flight position (304); and
one or more inner lug (428), each inner lug (428) attached to the fixed portion (124, 126) of the wing (102, 104) and each comprising the second opening that coincides with the first opening of the wingtip lug (424).

4. The method of any preceding claim, further comprising:
transitioning, via a latch actuator (432), the latch (412) between an open position (414) and a closed position (416); and
sensing, via an unlatched sensor (444): when the latch (412) is in the open position (414), and when the unlatched sensor (444) is connected to a latch pin actuator.

5. The method of any preceding claim, further comprising:
engaging, via a first spring (508) comprised by the first lock (502), the first lock (502);
biasing, via the first spring (508), the first lock (502) to the first engaged position (504);
engaging, via a second spring (608) comprised by the second lock (602), the second lock (602); and
biasing, via the second spring (608), the second lock (602) to the second engaged position (604).

6. The method of any preceding claim, further comprising:
disengaging, via a first piston (510) connected to the first cam (512), the first lock (502);
transitioning, via the first piston (510), the first lock (502) from the first engaged position (504) to a first disengaged position (506);
disengaging, via a second piston (610) connected to the second cam (612), the second lock (602); and
transitioning, via the second piston (610), the second lock (602) from the second engaged position (604) to a second disengaged position (606).

7. The method of any preceding claim, further comprising:
preventing, via a first contact member (514) comprised by the first cam (512), the first lock (502) from transitioning away from the first engaged position (504) before the second lock (602) transitions away from the second engaged position (604) via contact between the first contact member (514) of the first cam (512) and a second contact member (614) comprised by the second cam (612) when the first lock (502) is in the first engaged position (504) and the second lock (602) is in the second engaged position (604); and
preventing, via the second contact member (614), the second lock (602) from transitioning to the second engaged position (604) before the first lock (502) transitions to the first engaged position (504) via contact between the second contact member (614) comprised by the second cam (612) and the first contact member (514) comprised by the first cam (512) before the first lock (502) is in first engaged position (504).

8. The method of any preceding claim, further comprising:
minimizing, via a first surface (518) of a first lock member (516) of the first lock (502) of a group of locks (446) and a third surface (618) of a second lock member (616) of the second lock (602) of the group of locks (446), contact with the latch pin (434) in a closed position (416);
minimizing, via a second surface (520) of the first lock member (516) of the first lock (502) of the group of locks (446) and a fourth surface (620) of the second lock member (616) of the second lock (602) of the group of locks (446), contact with the latch pin (434) while transitioning to an open position (414);
minimizing, via the first surface (518), movement of the first lock member (516) during transition to the first engaged position (504); and
minimizing, via the third surface (618), movement of the second lock member (616) during transition to the second engaged position (604).

9. The method of claim 8, further comprising:
reducing, via a roller (524) of the first lock member (516) juxtaposed between the first surface (518) and the second surface (520), friction between the first lock member (516) and the latch pin (434) as the latch pin (434) moves into a group of lugs (422); and
sensing when the first lock (502) is in the first engaged position (504), via a sensor (636) that senses when the second lock (602) is in the second engaged position (604) .

10. The method of any of claims 8 to 9, further comprising:
controlling, via a group of first nubs (526) of the first lock member (516), movement of the first lock member (516) to stop the first lock member (516) in the first engaged position (504);
creating, via the group of first nubs (526), a group of first witness marks on the latch pin (434) to aid an inspection of the latch (412);
controlling, via a group of second nubs (626) of the second lock member (616), movement of the second lock member (616) to stop the second lock member (616) in the second engaged position (604);
creating, via the group of second nubs (626), a group of second witness marks on the latch pin (434) to aid the inspection of the latch (412);
identifying, via a quantity of nubs within the group of first nubs differing from a quantity of nubs within the group of second nubs, that the group of first nubs (526) creates the group of first witness marks and the group of second nubs (626) creates the group of second witness marks;
transferring a first force, via a first shaft (530) of the first lock (502), from a first piston (510) to first cam (512) and to the first lock member (516);
transferring a second force, via a second shaft (532) of the first lock (502), from the first spring (508) to the first lock member (516);
transferring a third force, via a third shaft (630) of the second lock (602), from a second piston (610) to the second cam (612) and to the second lock member (616); and
transferring a fourth force, via a fourth shaft (632) of the second lock (602), from the second spring (608) to the second lock member (616).

11. A wing fold system (128, 130) of a wing (102, 104) of an aircraft (100), the system (128, 130) comprising:
a first lock (502) of a latch (412) configured to prevent movement of a latch pin (434) of the latch (412) and prevent movement of an unfixed portion (120, 122) of the wing (102, 104) with respect to a fixed portion (124, 126) of the wing (102, 104), the first lock (502) comprising a first cam (512) configured to prevent a second lock (602) from transitioning to a second engaged position (604) until the first lock (502) is in a first engaged position (504) via contact with a second cam (612) of the second lock (602); and
the second lock (602) of the latch (412), the second lock (602) comprising the second cam (612) configured to prevent the first lock (502) from transitioning away from the first engaged position (504) until the second lock (602) transitions away from the second engaged position (604);
the system **characterized in that** it further comprises:
a latch actuator (432) configured to transition the latch (412) between an open position (414) and a closed position (416);
an unlatched sensor (444) to sense when the latch (412) is in the open position (414), the unlatched sensor (444) connected to the latch actuator (432);
the latch pin (434) configured to slide substantially parallel to one of: a roll axis, and a longitudinal axis of the aircraft (100);
the latch pin (434) comprising an inner pin (438) within an outer pin (440), the inner pin (438) configured to provide a secondary load path when the outer pin (440) is unable to provide a load path;
the outer pin (440) comprising a group of stacked pins (442);
the group of stacked pins (442) configured to separate the load path for a group of lugs (422) comprising one or more inner lug (428) and one or more wingtip lug (424); and
the group of stacked pins (442) configured to isolate an inability of one stacked pin, from remaining stacked pins of the group of stacked pins (442), to carry the load path.

12. The system of claim 11, further comprising:
one of: the first lock (502), and the second lock (602), configured to engage an outer pin (440);
the other of the first lock (502) and the second lock (602) may engage an inner pin (438) and the outer pin (440);
the first lock (502) comprising:
a first piston (510) configured to: disengage the first lock (502), and transition the first lock (502) from the first engaged position (504) to a first disengaged position (506),
and a first spring (508) configured to bias the first lock (502) to the first engaged position (504); and
the second lock (602) comprising:
a second piston (610) configured to: disengage the second lock (602), and transition the second lock (602) from the second engaged position (604) to a second disengaged position (606),
and a second spring (608) configured to bias the second lock (602) to the second engaged position (604).

13. The system of any of claim 11 or claim 12, further comprising:
the first cam (512) comprising a first contact member (514) configured to prevent the first lock (502) from transitioning away from the first engaged position (504) before the second lock (602) transitions away from the second engaged position (604) via contact between the first contact member (514) of the first cam (512) and a second contact member (614) comprised by the second cam (612) when the first lock (502) is in the first engaged position (504) and the second lock (602) is in the second engaged position (604); and
the second cam (612) comprising the second contact member (614) configured to prevent the second lock (602) from transitioning to the second engaged position (604) before the first lock (502) transitions to the first engaged position (504) via contact between the second contact member (614) and the first contact member (514) before the first lock (502) is in first engaged position (504);
a first shaft (530) of the first lock (502) configured to connect a first lock member (516) to the first cam (512) and a first piston (510);
a second shaft (532) of the first lock (502) configured to connect the first spring (508) with the first lock member (516) ;
a third shaft (630) of the second lock (602) configured to connect a second lock member (616) to the second cam (612) and a second piston (610); and
a fourth shaft (632) of the second lock (602) configured to connect the second spring (608) with the second lock member (616).

## Patentansprüche

1. Verfahren zum Anklappen eines Flügels (102, 104) eines Flugzeugs (100), wobei das Verfahren umfasst:
Bewegen eines nicht fest angebrachten Teils (120, 122, 804) des Flügels (102, 104) in Bezug auf einen fest angebrachten Teil (124, 126, 816) des Flügels (102, 104) zwischen einer Flugposition (304) und einer angeklappten Position (306) durch einen Klapp-Aktuator,
Verhindern einer Bewegung des nicht fest angebrachten Teils (120, 122, 804) des Flügels (102, 104) in Bezug auf den fest angebrachten Teil (124, 126, 816) des Flügels (102, 104) durch eine Verriegelung (412, 806), wobei die Verriegelung (412, 806) umfasst: eine erste Sperrvorrichtung (502, 1204), die dazu ausgestaltet ist, eine Bewegung eines Verriegelungsbolzens (434, 818) der Verriegelung (412, 806) zu verhindern, und einen ersten Nockenhebel (512, 1212), der dazu ausgestaltet ist, über Kontakt mit einem zweiten Nockenhebel (612, 1224), der eine zweite Sperrvorrichtung (602, 1206) aufweist, zu verhindern, dass die zweite Sperrvorrichtung (602, 1206) in eine zweite Eingriffsstellung (604) übergeht, bis sich die erste Sperrvorrichtung (502, 1204) in einer ersten Eingriffsstellung (504) befindet, und
Verhindern mittels des zweiten Nockenhebels (612, 1224), dass ein Übergang der ersten Sperrvorrichtung (502, 1204) von der ersten Eingriffsstellung (504) weg eintritt, bis ein Übergang der zweiten Sperrvorrichtung (602, 1206) von der zweiten Eingriffsstellung (604) weg stattfindet,
wobei das Verfahren **gekennzeichnet ist durch**
Schieben des Verriegelungsbolzens (434, 818) im Wesentlichen parallel zu einer Längsachse des Flugzeugs (100), wenn er zwischen einer offenen Stellung (414) und einer geschlossenen Stellung (416) wechselt,
wobei der Verriegelungsbolzen (434, 818) aufweisen kann:
einen inneren Bolzen (438, 1004) innerhalb eines äußeren Bolzens (440, 1034),
wobei der innere Bolzen (438, 1004) einen zweiten Lastweg bereitstellt, wenn der äußere Bolzen (440, 1034) nicht in der Lage ist, einen Lastweg bereitzustellen,
der innere Bolzen (438, 1004) den Lastweg nicht bereitstellt, bis der äußere Bolzen (440, 1034) nicht in der Lage ist, den Lastweg bereitzustellen,
der äußere Bolzen (440, 1034) eine Gruppe von hintereinander angeordneten Bolzen (442, 1008) umfasst,
In-Eingriff-Bringen des äußeren Bolzens (440, 1034) mittels einer unter der ersten Sperrvorrichtung (502, 1204) und der zweiten Sperrvorrichtung (602, 1206) ausgewählten Sperrvorrichtung,
In-Eingriff-Bringen des inneren Bolzens (438,1004) und des äußeren Bolzens (440, 1034) mittels der anderen unter der ersten Sperrvorrichtung (502, 1204) und der zweiten Sperrvorrichtung (602, 1206) ausgewählten Sperrvorrichtung,
Trennen des Lastwegs für eine Gruppe von Augen (422, 1010, 1012, 1014, 1016), die ein innen liegendes Auge oder mehrere innen liegende Augen (428, 1010, 1012, 1014, 1016) und ein Flügelenden-Auge oder mehrere Flügelenden-Augen (424, 812) umfasst, mittels der Gruppe von hintereinander angeordneten Bolzen (442, 1008) und
Isolieren eines Bolzens der hintereinander angeordneten Bolzen, der nicht in der Lage ist, den Lastweg bereitzustellen, von den verbliebenen hintereinander angeordneten Bolzen der Gruppe von hintereinander angeordneten Bolzen (442, 1008) mittels der Gruppe von hintereinander angeordneten Bolzen (442, 1008), um den Lastweg bereitzustellen.

2. Verfahren von Anspruch 1, das ferner umfasst:
Vorspannen einer Aktuator-Sperrvorrichtung (406) zu einer Eingriffsstellung mittels einer Aktuator-Feder (408), wenn sich der Klapp-Aktuator (404) in einer ausgefahrenen Stellung befindet.

3. Verfahren von einem vorhergehenden Anspruch, das ferner umfasst:
Sichern des nicht fest angebrachten Teils (120, 122) des Flügels (102, 104) an dem fest angebrachten Teil (124, 126) des Flügels (102, 104) mittels einer Gruppe von Augen (422), welche die Verriegelung (412) beinhalten, wobei die Gruppe von Augen (422) umfasst:
ein Flügelenden-Auge (424) oder mehrere Flügelenden-Augen (424), wobei jedes Flügelenden-Auge (424) an dem nicht fest angebrachten Teils (120, 122) des Flügels (102, 104) angebracht ist und jedes eine erste Öffnung aufweist, die mit einer zweiten Öffnung eines innen liegenden Auges (428) übereinstimmt, wenn sich der Flügel (102, 104) in einer Flugposition (304) befindet, und
ein innen liegendes Auge (428) oder mehrere innen liegende Augen (428), wobei jedes innen liegende Auge (428) an dem fest angebrachten Teil (124, 126) des Flügels (102, 104) angebracht ist und jedes die zweite Öffnung aufweist, die mit der ersten Öffnung des Flügelenden-Auges (424) übereinstimmt.

4. Verfahren von einem vorhergehenden Anspruch, das ferner umfasst:
Wechseln der Verriegelung (412) zwischen einer offenen Stellung (414) und einer geschlossenen Stellung (416) mittels eines Verriegelungs-Aktuators (432) und
Erfassen mittels eines Sensors (444) für nicht verriegelten Zustand: wenn sich die Verriegelung (412) in der offenen Stellung (414) befindet und, wenn der Sensor (444) für nicht verriegelten Zustand mit einem Verriegelungsbolzen-Aktuator verbunden ist.

5. Verfahren von einem vorhergehenden Anspruch, das ferner umfasst:
Zum-Einsatz-Bringen der ersten Sperrvorrichtung (502) mittels einer ersten Feder (508), die in der ersten Sperrvorrichtung (502) enthalten ist,
Vorspannen der ersten Sperrvorrichtung (502) zu der ersten Eingriffsstellung (504) mittels der ersten Feder (508),
Zum-Einsatz-Bringen der zweiten Sperrvorrichtung (602) mittels einer zweiten Feder (608), die in der zweiten Sperrvorrichtung (602) enthalten ist, und
Vorspannen der zweiten Sperrvorrichtung (602) zu der zweiten Eingriffsstellung (604) mittels der zweiten Feder (608).

6. Verfahren von einem vorhergehenden Anspruch, das ferner umfasst:
Lösen der ersten Sperrvorrichtung (502) mittels eines ersten Kolbens (510), der mit dem ersten Nockenhebel (512) verbunden ist,
Wechseln der ersten Sperrvorrichtung (502) von der ersten Eingriffsstellung (504) zu einer zu einer ersten Nichteingriffsstellung (506) mittels des ersten Kolbens (510),
Lösen der zweiten Sperrvorrichtung (602) mittels eines zweiten Kolbens (610), der mit dem zweiten Nockenhebel (612) verbunden ist,
und
Wechseln der zweiten Sperrvorrichtung (602) von der zweiten Eingriffsstellung (604) zu einer zu einer zweiten Nichteingriffsstellung (606) mittels des zweiten Kolbens (610).

7. Verfahren von einem vorhergehenden Anspruch, das ferner umfasst:
Verhindern, dass ein Übergang der ersten Sperrvorrichtung (502) von der ersten Eingriffsstellung (504) weg eintritt, mittels eines ersten Kontaktelements (514), das von dem ersten Nockenhebel (512) umfasst wird, bevor ein Übergang der zweiten Sperrvorrichtung (602) von der zweiten Eingriffsstellung (604) weg stattfindet, über Kontakt zwischen dem ersten Kontaktelement (514) des ersten Nockenhebels (512) und einem zweiten Kontaktelement (614), das von dem zweiten Nockenhebel (612) umfasst wird, wenn sich die erste Sperrvorrichtung (502) in der ersten Eingriffsstellung (504) befindet und sich die zweite Sperrvorrichtung (602) in der zweiten Eingriffsstellung (604) befindet, und
Verhindern, dass ein Übergang der zweiten Sperrvorrichtung (602) zu der zweiten Eingriffsstellung (604) eintritt, mittels des zweiten Kontaktelements (614), bevor ein Übergang der ersten Sperrvorrichtung (502) zu der ersten Eingriffsstellung (504) stattfindet, über Kontakt zwischen dem zweiten Kontaktelement (614), das von dem zweiten Nockenhebel (612) umfasst wird, und dem ersten Kontaktelement (514), das von dem ersten Nockenhebel (512) umfasst wird, bevor sich die erste Sperrvorrichtung (502) in der ersten Eingriffsstellung (504) befindet.

8. Verfahren von einem vorhergehenden Anspruch, das ferner umfasst:
Minimieren des Kontakts mit dem Verriegelungsbolzen (434) in einer geschlossenen Stellung (416) über eine erste Fläche (518) eines ersten Sperrelements (516) der ersten Sperrvorrichtung (502) einer Gruppe von Sperrvorrichtungen (446) und eine dritte Fläche (618) eines zweiten Sperrelements (616) der zweiten Sperrvorrichtung (602) der Gruppe von Sperrvorrichtungen (446),
Minimieren des Kontakts mit dem Verriegelungsbolzen (434), während er in eine offene Stellung (414) übergeht, über eine zweite Fläche (520) des ersten Sperrelements (516) der ersten Sperrvorrichtung (502) der Gruppe von Sperrvorrichtungen (446) und eine vierte Fläche (620) des zweiten Sperrelements (616) der zweiten Sperrvorrichtung (602) der Gruppe von Sperrvorrichtungen (446),
Minimieren der Bewegung des ersten Sperrelements (516) während des Übergangs zu der ersten Eingriffsstellung (504) über die erste Fläche (518) und
Minimieren der Bewegung des zweiten Sperrelements (616) während des Übergangs zu der zweiten Eingriffsstellung (604) über die dritte Fläche (618).

9. Verfahren von Anspruch 8, das ferner umfasst:
Verringern der Reibung zwischen dem ersten Sperrelement (516) und dem Verriegelungsbolzen (434), wenn sich der Verriegelungsbolzen (434) in eine Gruppe von Augen (422) bewegt, über eine Walze (524) des ersten Sperrelements (516), die sich zwischen der ersten Fläche (518) und der zweiten Fläche (520) befindet, und
Erfassen, wenn sich die erste Sperrvorrichtung (502) in der ersten Eingriffsstellung (504) befindet, durch einen Sensor (636), der erfasst, wenn sich die zweite Sperrvorrichtung (602) in der zweiten Eingriffsstellung (604) befindet.

10. Verfahren von einem der Ansprüche 8 bis 9, das ferner umfasst:
Steuern der Bewegung des ersten Sperrelements (516) über eine Gruppe von ersten Nasen (526) des ersten Sperrelements (516), um das erste Sperrelement (516) in der ersten Eingriffsstellung (504) anzuhalten,
Erzeugen einer Gruppe von ersten Bestätigungsmarkierungen an dem Verriegelungsbolzen (434) über die Gruppe von ersten Nasen (526), um eine Inspektion der Verriegelung (412) zu unterstützen,
Steuern der Bewegung des zweiten Sperrelements (616) über eine Gruppe von zweiten Nasen (626) des zweiten Sperrelements (616), um das zweite Sperrelement (616) in der zweiten Eingriffsstellung (604) anzuhalten,
Erzeugen einer Gruppe von zweiten Bestätigungsmarkierungen an dem Verriegelungsbolzen (434) über die Gruppe von zweiten Nasen (626), um die Inspektion der Verriegelung (412) zu unterstützen,
Identifizieren über eine Anzahl von Nasen innerhalb der Gruppe von ersten Nasen, die sich von einer Anzahl von Nasen innerhalb der Gruppe von zweiten Nasen unterscheiden, dass die Gruppe von ersten Nasen (526) die Gruppe von ersten Bestätigungsmarkierungen erzeugt und die Gruppe von zweiten Nasen (626) die Gruppe von zweiten Bestätigungsmarkierungen erzeugt,
Übertragen einer ersten Kraft von einem ersten Kolben (510) auf einen ersten Nockenhebel (512) und auf das erste Sperrelement (516) über eine erste Welle (530) der ersten Sperrvorrichtung (502),
Übertragen einer zweiten Kraft von der ersten Feder (508) auf das erste Sperrelement (516) über eine zweite Welle (532) der ersten Sperrvorrichtung (502),
Übertragen einer dritten Kraft von einem zweiten Kolben (610) auf den zweiten Nockenhebel (602) und auf das zweite Sperrelement (616) über eine dritte Welle (630) der zweiten Sperrvorrichtung (602)
und
Übertragen einer vierten Kraft von der zweiten Feder (608) auf das zweite Sperrelement (616) über eine vierte Welle (632) der zweiten Sperrvorrichtung (602).

11. Flügelanklappsystem (128, 130) eines Flügels (102, 104) eines Flugzeugs (100), wobei das System umfasst:
eine erste Sperrvorrichtung (502) einer Verriegelung (412), die so ausgebildet ist, dass sie eine Bewegung eines Verriegelungsbolzens (434) der Verriegelung (412) verhindert und eine Bewegung eines nicht fest angebrachten Teils (120, 122) des Flügels (102, 104) in Bezug auf einen fest angebrachten Teil (124, 126) des Flügels (102, 104) verhindert, wobei die erste Sperrvorrichtung (502) einen ersten Nockenhebel (512) aufweist, der so ausgebildet ist, dass er über Kontakt mit einem zweiten Nockenhebel (612) der zweiten Sperrvorrichtung (602) verhindert, dass eine zweite Sperrvorrichtung (602) in eine zweite Eingriffsstellung (604) wechselt, bis sich die erste Sperrvorrichtung (502) in einer ersten Eingriffsstellung (504) befindet, und
die zweite Sperrvorrichtung (602) der Verriegelung (412), wobei die zweite Sperrvorrichtung (602), die den zweiten Nockenhebel (612) umfasst, so ausgebildet ist, dass sie verhindert, dass die erste Sperrvorrichtung (502) von der ersten Eingriffsstellung (504) weg wechselt, bis die zweite Sperrvorrichtung (602) von der zweiten Eingriffsstellung (604) weg wechselt,
wobei das System **dadurch gekennzeichnet ist, dass** es ferner umfasst:
einen Verriegelungs-Aktuator (432), der dazu ausgebildet ist, die Verriegelung (412) zwischen einer offenen Stellung (414) und einer geschlossenen Stellung (416) umzuschalten,
einen Sensor (444) für nicht verriegelten Zustand zum Erfassen, wenn sich die Verriegelung (412) in der offenen Stellung (414) befindet, wobei der Sensor (444) für nicht verriegelten Zustand mit dem Verriegelungs-Aktuator (432) verbunden ist,
wobei der Verriegelungsbolzen (434) so ausgebildet ist, dass er im Wesentlichen parallel zu einer Rollachse oder einer Längsachse des Flugzeugs (100) verschoben werden kann,
wobei der Verriegelungsbolzen (434) einen inneren Bolzen (438) innerhalb eines äußeren Bolzens (440) aufweist, wobei der innere Bolzen (438) dazu ausgebildet ist, einen zweiten Lastweg bereitzustellen, wenn der äußere Bolzen (440) nicht in der Lage ist, einen Lastweg bereitzustellen,
wobei der äußere Bolzen (440) eine Gruppe von hintereinander angeordneten Bolzen (442) umfasst,
wobei die Gruppe von hintereinander angeordneten Bolzen (442) dazu ausgebildet ist, den Lastweg für eine Gruppe von Augen (422) zu trennen, die ein innen liegendes Auge (428) oder mehrere innen liegende Augen (428) und ein Flügelenden-Auge (424) oder mehrere Flügelenden-Augen (424) umfasst, und
wobei die Gruppe von hintereinander angeordneten Bolzen (442) dazu ausgebildet ist, einen der hintereinander angeordneten Bolzen, der nicht in der Lage ist, den Lastweg aufzunehmen, von den verbliebenen hintereinander angeordneten Bolzen der Gruppe von hintereinander angeordneten Bolzen (442) zu trennen.

12. System von Anspruch 11, das ferner umfasst:
eine Sperrvorrichtung aus der Gruppe, welche die erste Sperrvorrichtung (502) und die zweite Sperrvorrichtung (602) umfasst, die dazu ausgebildet ist, an einem äußeren Bolzen (440) anzugreifen,
die andere Sperrvorrichtung aus der Gruppe, welche die erste Sperrvorrichtung (502) und die zweite Sperrvorrichtung (602) umfasst, an einem inneren Bolzen (438) und dem äußeren Bolzen (440) angreifen kann,
wobei die erste Sperrvorrichtung (502) umfasst:
einen ersten Kolben (510), der dazu ausgebildet ist, die erste Sperrvorrichtung (502) zu lösen und die erste Sperrvorrichtung (502) von der ersten Eingriffsstellung (504) in eine erste Nichteingriffsstellung (506) zu bringen,
und eine erste Feder (508), die dazu ausgebildet ist, die erste Sperrvorrichtung (502) in der ersten Eingriffsstellung (504) vorzuspannen,
und wobei die zweite Sperrvorrichtung (602) umfasst:
einen zweiten Kolben (610), der dazu ausgebildet ist, die zweite Sperrvorrichtung (602) zu lösen und die zweite Sperrvorrichtung (602) von der zweiten Eingriffsstellung (604) in eine zweite Nichteingriffsstellung (606) zu bringen,
und eine zweite Feder (608), die dazu ausgebildet ist, die zweite Sperrvorrichtung (602) in der zweiten Eingriffsstellung (604) vorzuspannen.

13. System von Anspruch 11 oder Anspruch 12, das ferner umfasst:
der erste Nockenhebel (512) umfasst ein erstes Kontaktelement (514), das dazu ausgebildet ist, dass es verhindert, dass ein Übergang der ersten Sperrvorrichtung (502) von der ersten Eingriffsstellung (504) weg eintritt, bevor ein Übergang der zweiten Sperrvorrichtung (602) von der zweiten Eingriffsstellung (604) weg stattfindet, über Kontakt zwischen dem ersten Kontaktelement (514) des ersten Nockenhebels (512) und einem zweiten Kontaktelement (614), das von dem zweiten Nockenhebel (612) umfasst wird, wenn sich die erste Sperrvorrichtung (502) in der ersten Eingriffsstellung (504) befindet und sich die zweite Sperrvorrichtung (602) in der zweiten Eingriffsstellung (604) befindet, und
der zweite Nockenhebel (612) umfasst das zweite Kontaktelement (614), das dazu ausgebildet ist, dass es verhindert, dass ein Übergang der zweiten Sperrvorrichtung (602) zu der zweiten Eingriffsstellung (604) eintritt, bevor ein Übergang der ersten Sperrvorrichtung (502) zu der ersten Eingriffsstellung (504) stattfindet, über Kontakt zwischen dem zweiten Kontaktelement (614) und dem ersten Kontaktelement (514), bevor sich die erste Sperrvorrichtung (502) in der ersten Eingriffsstellung (504) befindet,
eine erste Welle (530) der ersten Sperrvorrichtung (502), die so ausgebildet ist, dass sie ein erstes Sperrelement (516) mit dem ersten Nockenhebel (512) und einem ersten Kolben (510) verbindet,
eine zweite Welle (532) der ersten Sperrvorrichtung (502), die so ausgebildet ist, dass sie die erste Feder (508) mit dem ersten Sperrelement (516) verbindet,
eine dritte Welle (630) der zweiten Sperrvorrichtung (602), die so ausgebildet ist, dass sie ein zweites Sperrelement (616) mit dem zweiten Nockenhebel (612) und einem zweiten Kolben (610) verbindet, und
eine vierte Welle (632) der zweiten Sperrvorrichtung (602), die so ausgebildet ist, dass sie die zweite Feder (608) mit dem zweiten Sperrelement (616) verbindet.

## Revendications

1. Procédé pour plier une aile (102, 104) d'un avion (100), le procédé comprenant les étapes consistant à :
déplacer, via un actionneur de pliage, une partie non fixée (120, 122, 804) de l'aile (102, 104) par rapport à une partie fixée (124, 126, 816) de l'aile (102, 104) entre une position de vol (304) et une position pliée (306) ;
empêcher, via un verrou (412, 806), le déplacement de la partie non fixée (120, 122, 804) de l'aile (102, 104) par rapport à la partie fixée (124, 126, 816) de l'aile (102, 104), le verrou (412, 806) comprenant : un premier verrouillage (52, 1204) configuré pour empêcher le déplacement d'une goupille de verrouillage (434, 818) du verrou (412, 806), et une première came (512, 1212) configure pour, via le contact avec une seconde came (612, 1224) comprenant un second verrouillage (602, 1206), empêcher le second verrouillage (602, 1206) d'effectuer une transition dans une seconde position mise en prise (604) jusqu'à ce que le premier verrouillage (502, 1204) soit dans une première position mise en prise (504) ; et
empêcher, via la seconde came (612, 1224), le premier verrouillage (502, 1204) d'effectuer une transition à distance de la première position mise en prise (504) jusqu'à ce que le second verrouillage (602, 1206) effectue une transition à distance de la seconde position mise en prise (604) ;
le procédé étant **caractérisé par** l'étape consistant à :
faire coulisser la goupille de verrouillage (434, 818) sensiblement parallèlement à un axe longitudinal de l'avion (100) lors de la transition entre une position ouverte (414) et une position fermée (416) ;
dans lequel la goupille de verrouillage (434, 818) peut comprendre :
une goupille interne (438, 1004) à l'intérieur d'une goupille externe (440, 1034) ;
la goupille interne (438, 1004) fournissant une trajectoire de charge secondaire si la goupille externe (440, 1034) ne peut pas fournir une trajectoire de charge ;
la goupille interne (438, 1004) ne fournissant pas la trajectoire de charge jusqu'à ce que la goupille externe (440, 1034) soit incapable de fournir une trajectoire de charge ;
la goupille externe (440, 1034) comprenant un groupe de goupilles empilées (442, 1008) ;
mettre en prise, via l'un parmi le premier verrouillage (502, 1204) et le second verrouillage (602, 1206), la goupille externe (440, 1034) ;
mettre en prise, via l'autre parmi le premier verrouillage (502, 1204) et le second verrouillage (602, 1206), la goupille interne (438, 1004) et la goupille externe (440, 1034) ;
séparer, via le groupe de goupilles empilées (442, 1008), la trajectoire de charge pour un groupe de pattes (422, 1010, 1012, 1014, 1016) comprenant une ou plusieurs pattes internes (428, 1010, 1012, 1014, 1016) et une ou plusieurs pattes de bout d'aile (424, 812) ; et
isoler, via le groupe de goupilles empilées (442, 1008), une incapacité d'une goupille empilée, des goupilles empilées résiduelles du groupe de goupilles empilées (442, 1008), de fournir la trajectoire de charge.

2. Procédé selon la revendication 1, comprenant en outre l'étape consistant à :
solliciter, via un ressort d'actionneur (408), un verrouillage d'actionneur (406) dans une position mise en prise lorsque l'actionneur de pliage (404) est dans une position étendue.

3. Procédé selon l'une quelconque des revendications précédentes, comprenant en outre l'étape consistant à :
fixer, via un groupe de pattes (422) comprenant le verrou (412), la partie non fixée (120, 122) de l'aile (102, 104) à la partie fixée (124, 126) de l'aile (102, 104), le groupe de pattes (422) comprenant :
une ou plusieurs pattes de bout d'aile (424), chaque patte de bout d'aile (424) étant fixée à la partie non fixée (120, 122) de l'aile (102, 104) et comprenant chacune une première ouverture qui coïncide avec une seconde ouverture d'une patte interne (428) lorsque l'aile (102, 104) est dans une position de vol (304) ; et
une ou plusieurs pattes internes (428), chaque patte interne (428) étant fixée à la partie fixée (124, 126) de l'aile (102, 104) et comprenant chacune la seconde ouverture qui coïncide avec la première ouverture de la patte de bout d'aile (424).

4. Procédé selon l'une quelconque des revendications précédentes, comprenant en outre les étapes consistant à :
faire effectuer une transition, via un actionneur de verrou (432), au verrou (412) entre une position ouverte (414) et une position fermée (416) ; et
détecter, via un capteur déverrouillé (444) : le moment où le verrou (412) est dans la position ouverte (414), et le moment où le capteur déverrouillé (444) est raccordé à un actionneur de goupille de verrouillage.

5. Procédé selon l'une quelconque des revendications précédentes, comprenant en outre les étapes consistant à :
mettre en prise, via un premier ressort (508) composé par le premier verrouillage (502), le premier verrouillage (502) ;
solliciter, via le premier ressort (508), le premier verrouillage (502) dans la première position mise en prise (504) ;
mettre en prise, via un second ressort (608) composé par le second verrouillage (602), le second verrouillage (602) ; et
solliciter, via le second ressort (608), le second verrouillage (602) dans la seconde position mise en prise (604).

6. Procédé selon l'une quelconque des revendications précédentes, comprenant en outre les étapes consistant à :
dégager, via un premier piston (510) raccordé à la première came (512), le premier verrouillage (502) ;
faire effectuer une transition, via le premier piston (510), au premier verrouillage (502) de la première position mise en prise (504) à une première position dégagée (506) ;
dégager, via un second piston (610) raccordé à la seconde came (612), le second verrouillage (602) ; et
faire effectuer une transition, via le second piston (610), au second verrouillage (602) de la seconde position mise en prise (604) à une seconde position dégagée (606).

7. Procédé selon l'une quelconque des revendications précédentes, comprenant en outre les étapes consistant à :
empêcher, via un premier élément de contact (514) composé par la première came (512), le premier verrouillage (502) d'effectuer une transition à distance de la première position mise en prise (504) avant que le second verrouillage (602) n'effectue une transition à distance de la seconde position mise en prise (604) via le contact entre le premier élément de contact (514) de la première came (512) et un second élément de contact (614) composé par la seconde came (612) lorsque le premier verrouillage (502) est dans la première position mise en prise (504) et le second verrouillage (602) est dans la seconde position mise en prise (604) ; et
empêcher, via le second élément de contact (614), le second verrouillage (602) d'effectuer une transition dans la seconde position mise en prise (604) avant que le premier verrouillage (502) n'effectue une transition dans la première position mise en prise (504) via le contact entre le second élément de contact (614) composé par la seconde came (612) et le premier élément de contact (514) composé par la première came (512) avant que le premier verrouillage (502) ne soit dans la première position mise en prise (504).

8. Procédé selon l'une quelconque des revendications précédentes, comprenant en outre les étapes consistant à :
minimiser, via une première surface (518) d'un premier élément de verrouillage (516) du premier verrouillage (502) d'un groupe de verrouillages (446) et une troisième surface (618) d'un second élément de verrouillage (616) du second verrouillage (602) du groupe de verrouillages (446), le contact avec la goupille de verrouillage (434) dans une position fermée (416) ;
minimiser, via une deuxième surface (520) du premier élément de verrouillage (516) du premier verrouillage (502) du groupe de verrouillages (446) et une quatrième surface (620) du second élément de verrouillage (616) du second verrouillage (602) du groupe de verrouillages (446), le contact avec la goupille de verrouillage (434) tout en effectuant une transition dans une position ouverte (414) ;
minimiser, via la première surface (518), le déplacement du premier élément de verrouillage (516) pendant la transition dans la première position mise en prise (504) ; et
minimiser, via la troisième surface (618), le déplacement du second élément de verrouillage (616) pendant la transition dans la seconde position mise en prise (604).

9. Procédé selon la revendication 8, comprenant en outre les étapes consistant à :
réduire, via un rouleau (524) du premier élément de verrouillage (516) juxtaposé entre la première surface (518) et la deuxième surface (520), la friction entre le premier élément de verrouillage (516) et la goupille de verrouillage (434) lorsque la broche de verrouillage (434) se déplace dans un groupe de pattes (422) ; et
détecter, lorsque le premier verrou (502) est dans la première position mise en prise (504), via un capteur (636) qui détecte le moment où le second verrouillage (602) est dans la seconde position mise en prise (604).

10. Procédé selon l'une quelconque des revendications 8 à 9, comprenant en outre les étapes consistant à :
contrôler, via un groupe de premiers boutons (526) du premier élément de verrouillage (516), le déplacement du premier élément de verrouillage (516) pour arrêter le premier élément de verrouillage (516) dans la première position mise en prise (504) ;
créer, via le groupe de premiers boutons (526), un groupe de premiers repères sur la goupille de verrouillage (434) pour aider une inspection du verrou (412) ;
contrôler, via un groupe de seconds boutons (626) du second élément de verrouillage (616), le déplacement du second élément de verrouillage (616) pour arrêter le second élément de verrouillage (616) dans la seconde position mise en prise (604) ;
créer, via le groupe de seconds boutons (626), un groupe de seconds repères sur la goupille de verrouillage (434) pour aider l'inspection du verrou (412) ;
identifier, via une quantité de boutons à l'intérieur du groupe de premiers boutons différant d'une quantité de boutons dans le groupe de seconds boutons, que le groupe de premiers boutons (526) crée le groupe de premiers repères et que le groupe de seconds boutons (626) crée le groupe de seconds repères ;
transférer une première force, via un premier arbre (530) du premier verrou (502), d'un premier piston (510) à la première came (512) et au premier élément de verrouillage (516) ;
transférer une deuxième force, via un deuxième arbre (532) du premier verrouillage (502), du premier ressort (508) au premier élément de verrouillage (516) ;
transférer une troisième force, via un troisième arbre (630) du second verrouillage (602), d'un second piston (610) à la seconde came (612) et au second élément de verrouillage (616) ; et
transférer une quatrième force, via un quatrième arbre (632) du second verrouillage (602), du second ressort (608) au second élément de verrouillage (616).

11. Système de pliage d'aile (128, 130) d'une aile (102, 104) d'un avion (100), le système (128, 130) comprenant :
un premier verrouillage (502) d'un verrou (412) configuré pour empêcher le déplacement d'une goupille de verrouillage (434) du verrou (412) et empêcher le déplacement d'une partie non fixée (120, 122) de l'aile (102, 104) par rapport à une partie fixée (124, 126) de l'aile (102, 104), le premier verrouillage (502) comprenant une première came (512) configurée pour empêcher un second verrouillage (602) d'effectuer une transition dans une seconde position mise en prise (604) jusqu'à ce que le premier verrouillage (502) soit dans une première position mise en prise (504) via le contact avec une seconde came (612) du second verrouillage (602) ; et
le second verrouillage (602) du verrou (412), le second verrouillage (602) comprenant la seconde came (612) configurée pour empêcher le premier verrouillage (502) d'effectuer une transition à distance de la première position mise en prise (504) jusqu'à ce que le second verrouillage (602) effectue une transition à distance de la seconde position mise en prise (604) ;
le système étant **caractérisé en ce qu'**il comprend en outre :
un actionneur de verrou (432) configuré pour faire effectuer une transition au verrou (412) entre une position ouverte (414) et une position fermée (416) ;
un capteur déverrouillé (444) pour détecter le moment où le verrou (412) est dans la position ouverte (414), le capteur déverrouillé (444) étant raccordé à l'actionneur de verrou (432) ;
la goupille de verrouillage (434) configurée pour coulisser sensiblement parallèlement à l'un parmi : un axe de roulis, et un axe longitudinal de l'avion (100) ;
la goupille de verrouillage (434) comprenant une goupille interne (438) à l'intérieur d'une goupille externe (440), la goupille interne (438) étant configurée pour fournir une trajectoire de charge secondaire lorsque la goupille externe (440) ne peut pas fournir une trajectoire de charge ;
la goupille externe (440) comprenant un groupe de goupilles empilées (442) ;
le groupe de goupilles empilées (442) étant configuré pour séparer la trajectoire de charge pour un groupe de pattes (422) comprenant une ou plusieurs pattes internes (428) et une ou plusieurs pattes de bout d'aile (424) ; et
le groupe de goupilles empilées (442) configuré pour isoler une incapacité d'une goupille empilée, des goupilles empilées résiduelles du groupe de goupilles empilées (442), de porter la trajectoire de charge.

12. Système selon la revendication 11, comprenant en outre :
l'un parmi : le premier verrouillage (502), et le second verrouillage (602), configuré pour mettre en prise une goupille externe (440) ;
l'autre parmi le premier verrouillage (502) et le second verrouillage (602) peut mettre en prise une goupille interne (438) et la goupille externe (440) ;
le premier verrouillage (502) comprenant :
un premier piston (510) configuré pour : dégager le premier verrouillage (502), et faire effectuer une transition au premier verrouillage (502) de la première position mise en prise (504) à une première position dégagée (506),
et un premier ressort (508) configuré pour solliciter le premier verrouillage (502) dans la première position mise en prise (504) ; et
le second verrouillage (602) comprenant :
un second piston (610) configuré pour : dégager le second verrouillage (602), et faire effectuer une transition au second verrouillage (602) de la seconde position mise en prise (604) à une seconde position dégagée (606),
et un second ressort (608) configuré pour solliciter le second verrouillage (602) dans la seconde position mise en prise (604).

13. Système selon l'une quelconque des revendications 11 ou 12, comprenant en outre :
la première came (512) comprenant un premier élément de contact (514) configuré pour empêcher le premier verrouillage (502) d'effectuer une transition à distance de la première position mise en prise (504) avant que le second verrouillage (602) n'ait effectué une transition à distance de la seconde position mise en prise (604) via le contact entre le premier élément de contact (514) de la première came (512) et un second élément de contact (614) composé par la seconde came (612) lorsque le premier verrouillage (502) est dans la première position mise en prise (504) et le second verrouillage (602) est dans la seconde position mise en prise (604) ; et
la seconde came (612) comprenant le second élément de contact (614) configuré pour empêcher le second verrouillage (602) d'effectuer une transition dans la seconde position mise en prise (604) avant que le premier verrouillage (502) n'effectue une transition dans la première position mise en prise (504) via le contact entre le second élément de contact (614) et le premier élément de contact (514) avant que le premier verrouillage (502) ne soit dans la première position mise en prise (504) ;
un premier arbre (530) du premier verrouillage (502) configuré pour raccorder un premier élément de verrouillage (516) à la première came (512) et un premier piston (510) ;
un deuxième arbre (532) du premier verrouillage (502) configuré pour raccorder le premier ressort (508) avec le premier élément de verrouillage (516) ;
un troisième arbre (630) du second verrouillage (602) configuré pour raccorder un second élément de verrouillage (616) à la seconde came (612) et à un second piston (610) ; et
un quatrième arbre (632) du second verrouillage (602) configuré pour raccorder le second ressort (608) avec le second élément de verrouillage (616).
